# EUROPEAN PATENT APPLICATION

(11) **EP 2 717 144 A1**
(43) Date of publication of application: **09.04.2014**
(21) Application number: 12793437.0
(22) Date of filing: 11.05.2012
(51) Int. Cl.: G06F 3/048, G06F 3/16, G06F 17/30

(54) **FUNCTION PRESENTATION SYSTEM, TERMINAL DEVICE, SERVER DEVICE, PROGRAM AND FUNCTION PRESENTATION METHOD**

(30) Priority: 27.05.2011 JP 2011119527
(71) Applicant: NTT DOCOMO, INC., Chiyoda-ku Tokyo 100-6150 (JP)
(72) Inventor: IIZUKA, Shinya, Tokyo 100-6150 (JP); YOSHIMURA, Takeshi, Tokyo 100-6150 (JP)
(74) Representative: HOFFMANN EITLE
(86) International application number: PCT/JP2012/062147
(87) International publication number: WO 2012/165122

(57) **Abstract**

To present a plurality of functions that is a candidate for implementation based on an input character string, and to support a user in selecting a function.

Server device 10 acquires input information input into terminal device 20 (SA1 to SA3), recognizes the input information with reference to a dictionary file, the dictionary file serving as a voice-recognition dictionary describing an identifier representing a category, the category being determined based on a meaning of a registered character string, and specifies an input character string and the first identifier, the first identifier representing a category of a registered character string included in the input character string (SA5). Server device 10 transmits the specified character string and first identifier to terminal device 20 (SA6). Terminal device 20 selects, with reference a function-selection file describing a correspondence between the first identifier and a category to which a function to be presented belongs, a category to which a function corresponding to the first identifier belongs (SA7 to SA9), and presents a plurality of functions belonging to the selected category in a predetermined presenting manner (for example, prior to the other functions) (SA10).

## Description

### Technical Field

The present invention relates to a technique for supporting a user in selecting a function.

### Background Art

There exists a technique for estimating a function that a user desires to use based on a character string input by a user. Patent Document 1 discloses a technique for determining a type of character string, such as an amount of money or a telephone number, by analyzing an input character string, and automatically launching an application program corresponding to the determined type. Patent Document 2 discloses a technique for selecting, from a plurality of search engines, a relevant search engine specialized in a particular field by parsing a sentence input for a search, and searching information by using the selected search engine.

Patent Document 3 discloses a technique for determining an attribute of an input character string with reference to a plurality of data tables, each data table describing a correspondence between a character string and an attribute of the character string, and determining a search method appropriate to the attribute of the input character string with reference to another data table describing a correspondence between the determined attribute of the character string and a search method. According to the invention described in Document 3, in determining an attribute of each character included in an input character string, a single attribute for a single character is sequentially determined in a predetermined order, and an attribute of each character string is determined so as to avoid overlap with an attribute of a character string that is already defined.

### Prior Art

### Patent Document

Patent Document 1: JP10-154069A
Patent Document 2: JP2003-132060A
Patent Document 3: JP2009-266207A

### Summary of the Invention

### Problem to be Solved by the Invention

In each of the inventions described in patent Documents 1 to 3 an appropriate single function is estimated so as to reduce a burden of a user regarding a selection of a function. However, since a terminal device, such as a smart phone or a cellular phone, can implement many functions, it may be difficult to narrow down and estimate a single function that a user of the terminal device desires. For example, in a case where an input character string includes a character string "Yokohama," which is a place name, when a user desires to know how to get to Yokohama from a present position by train, a function for providing a rail transfer guide may be appropriate for the user. However, in this case, when a user desires to obtain information on restaurants located in Yokohama, a browser function for displaying a web site for providing gourmet guide information may be appropriate for the user. Also, in this case, when the user desires to obtain geographical information about Yokohama, a map function may be appropriate for the user. In addition, there may be a plurality of functions to satisfy a user's requirements, as there are various web sites for providing gourmet guide information. In this case, it is considered that a function that a user desires to use may vary according to circumstances. The inventions described in patent Documents 1 to 3 are not made based on a technical idea of positively presenting a plurality of functions in view of a possibility of a user's requirements.

An object of the present invention is to support a user in selecting a function by presenting a plurality of functions based on an input character string.

### Means for Solving the Problem

According to one aspect of the present invention, there is provided a function-presenting system including: an information-acquiring unit that acquires input information; a first memory that stores a plurality of identifiers, each identifier representing a category of a registered character string; a specifying unit that, with reference to the first memory, specifies, based on the input information acquired by the information acquiring unit, an identifier of a registered character string corresponding to an input character string represented by the input information; a second memory that stores a correspondence between each of the plurality of identifiers and a plurality of functions; and a presenting unit that determines a plurality of functions based on the identifier specified by the specifying unit with reference to the second memory, and presents the determined plurality of functions in a predetermined presenting manner.

In a preferred aspect, the first memory stores a dictionary file in which a single identifier is assigned to a registered character string, the dictionary being used for recognizing the input information; and the specifying unit recognizes the acquired input information with reference to the dictionary file, and specifies a recognized input character string and an identifier of a registered character string corresponding to the recognized input character string.

In yet another preferred aspect, the specifying unit specifies two or more identifiers for a single registered character string included in the input character string.

In yet another preferred aspect, each of the plurality of identifiers represents a category corresponding to a meaning of a single registered character string; the second memory stores a single identifier and a plurality of types of functions in association with each other; and the plurality of functions presented by the presenting unit includes a function belonging to a type stored in the second memory in association with the identifier specified by the specifying unit.

In another preferred aspect, each of the plurality of identifiers represents a plurality of types of functions determined for the registered character string; the first memory stores a plurality of weighting values assigned to respective pluralities of types of functions; the specifying unit specifies the identifier and a plurality of weighting values assigned to respective pluralities of types of functions represented by the specified identifier with reference to the first memory; and the presenting unit determines the plurality of functions to be presented based on the identifier and the plurality of weighting values specified by the specifying unit.

In yet another preferred aspect, each of the plurality of identifiers includes at least one first identifier representing a category corresponding to a meaning of the registered character string, and a plurality of second identifiers representing respective pluralities of types of functions determined for the registered character string; the first memory stores the at least one first identifier, the plurality of second identifiers, and a plurality of weighting values assigned to the respective pluralities of types of functions for each registered character string; and the presenting unit determines the plurality of functions to be presented based on the at least one first identifier specified by the specifying unit or the plurality of weighting values corresponding to the plurality of second identifiers specified by the specifying unit with reference to the second memory.

In yet another preferred aspect, the presenting unit varies the presenting manner based on a notation of a registered character string corresponding to the input character string.

In yet another preferred aspect, the function-presenting system further includes a first updating unit that updates a content stored in the first memory based on a single function that a user instructs to be implemented after the plurality of functions are presented by the presenting unit.

In yet another preferred aspect, the function-presenting system further includes a second updating unit that updates a content stored in the second memory based on a single function that a user instructs to be implemented after the plurality of functions are presented by the presenting unit.

In yet another preferred aspect, the function-presenting system further includes a function-implementing unit that implements a single function satisfying a determined condition of the plurality of functions presented by the presenting unit; and wherein the presenting unit presents a result of implementing a function by the function-implementing unit, together with a plurality of functions determined based on the identifier specified by the specifying unit.

According to another aspect of the present invention, there is provided a function-presenting system including: the server device including: a first communication unit that communicates with the terminal device; an information-acquiring unit that acquires input information input via the terminal device; a first memory that stores a plurality of identifiers, each representing a category of a registered character string; a specifying unit that, with reference to the first memory, specifies, based on the input information acquired by the information acquiring unit, an identifier of a registered character string corresponding to an input character string, the input character string being represented by the input information; and a transmission-control unit that controls the first communication unit to transmit to the terminal device the identifier specified by the specifying unit; and the terminal device including: a second communication unit that communicates with the server device; a second memory that stores a correspondence between each of the plurality of identifiers, and a single function or a plurality of functions; an identifier-acquiring unit that acquires the identifier received from the server device via the second communication unit; and a presenting unit that determines a plurality of functions based on the identifier acquired by the identifier-acquiring unit with reference to the second memory, and presents the determined plurality of functions in a predetermined presenting manner.

According to yet another aspect of the present invention, there is provided a terminal device including: a communication unit that communicates with a server device; an identifier-acquiring unit that acquires an identifier via the communication unit when the server device specifies the identifier representing a category of a registered character string corresponding to an input character string, the input character string being represented by input information input into the terminal device; a memory that stores a correspondence between each of a plurality of identifiers and a plurality of functions; and a presenting unit that determines a plurality of functions based on the identifier acquired by the identifier-acquiring unit with reference to the memory, and presents the determined plurality of functions in a predetermined presenting manner.

According to yet another aspect of the present invention, there is provided a server device including: a communication unit that communicates with a terminal device, the terminal device presenting a plurality of functions corresponding to an identifier received from the server device; an information-acquiring unit that acquires input information input into the terminal device; a memory that stores a plurality of identifiers, each representing a category of a registered character string; a specifying unit that, with reference to the memory, specifies, based on the input information acquired by the information-acquiring unit, an identifier of a registered character string corresponding to an input character string represented by the input information; and a transmission-control unit that controls the communication unit to transmit to the terminal device the identifier specified by the specifying unit.

According to yet another aspect of the present invention, there is provided a computer readable medium storing a program for causing a computer of a terminal device including a communication unit to execute the steps of: acquiring an identifier via the communication unit when a server device specifies the identifier representing a category of a registered character string for the registered character corresponding to an input character string, the input character string being represented by input information input into the terminal device; determining a plurality of functions based on the acquired identifier with reference to the memory, the memory storing a correspondence between each of a plurality of identifiers and a plurality of functions; and presenting the determined plurality of functions in a predetermined presenting manner.

According to yet another aspect of the present invention, there is provided a computer readable medium storing a program for causing a computer of a server device including a communication unit to execute the steps of: acquiring input information input via a terminal device, the terminal device presenting a plurality of functions corresponding to an identifier received from the server device; specifying, based on the acquired input information and with reference to a memory, an identifier of a registered character string corresponding to an input character string represented by the input information, the memory storing a plurality of identifiers, each representing a category of a registered character string; and controlling the communication unit to transmit the specified identifier to the terminal device.

According to yet another aspect of the present invention, there is provided a function-presenting method including the steps of: acquiring input information; specifying, based on the acquired input information and with reference to a first memory, an identifier representing a category of a registered character string corresponding to an input character string represented by the input information, the first memory storing a plurality of identifiers, each representing a category of a registered character string; determining a plurality of functions based on the specified identifier with reference to a second memory, the second memory storing a correspondence between each of the plurality of identifiers and a plurality of functions; and presenting the determined plurality of functions in a predetermined presenting manner.

### Effects of the Invention

According to the present invention, a plurality of functions is presented based on an input character string, and a user is supported in selecting a function.

### Brief Description of the Drawings

Fig. 1 is a diagram showing an overall configuration of a function-presenting system.
Fig. 2 is a block diagram showing a configuration of a server device.
Fig. 3 is a diagram showing a dictionary file according to the first embodiment.
Fig. 4 is a block diagram showing a configuration of a terminal device.
Fig. 5 is a diagram showing a function-selection file according to the first embodiment.
Fig. 6 is a diagram showing a function-control table.
Fig. 7 is a block diagram showing a functional configuration of a control unit of a server device according to the first embodiment.
Fig. 8 is a block diagram showing a functional configuration of a control unit of a terminal device according to the first embodiment.
Fig. 9 is a sequence diagram showing an operation of a function-presenting system according to the first embodiment.
Fig. 10 is a diagram showing a function-presenting screen.
Fig. 11 is a diagram showing a function-presenting screen.
Fig. 12 is a diagram showing a dictionary file according to the second embodiment.
Fig. 13 is a diagram showing a function-selection file according to the second embodiment.
Fig. 14 is a sequence diagram showing an operation of a function-presenting system according to the second embodiment.
Fig. 15 is a diagram showing a dictionary file according to the third embodiment.
Fig. 16 is a diagram showing a function-selection file according to the third embodiment.
Fig. 17 is a diagram showing a weighting-update table.
Fig. 18 is a block diagram showing a functional configuration of a control unit of a server device according to the fourth embodiment.
Fig. 19 is a sequence diagram showing an operation of a function-presenting system according to the fourth embodiment.
Fig. 20 is a sequence diagram showing an operation of a function-presenting system according to the fourth embodiment.
Fig. 21 is a block diagram showing a functional configuration of a control unit of a terminal device according to the fifth embodiment.
Fig. 22 is a sequence diagram showing an operation of a function-presenting system according to the fifth embodiment.
Fig. 23 is a sequence diagram showing an operation of a function-presenting system according to the fifth embodiment.
Fig. 24 is a flow chart showing an operation of a terminal device according to the first modification.
Fig. 25 is a block diagram showing a functional configuration of a function-presenting system.

### Description of Reference Numerals

- 1: Function-presenting system
- 10: Server device
- 11: Control unit
- 111: Information-acquiring unit
- 112: Specifying unit
- 113: Transmission-control unit
- 114: Update-data-acquiring unit
- 115: First updating unit
- 12: Communication unit
- 13: Storage unit
- 131, 131a, 131b: Dictionary file
- 132: Weighting-update table
- 20: Terminal device
- 21: Control unit
- 211: Identifier-acquiring unit
- 212: Presenting unit
- 213: Function-implementing unit
- 214: Update-data-acquiring unit
- 215: Second updating unit
- 22: Sound input-output unit
- 23: Wireless communication unit
- 24: UI unit
- 25: Storage unit
- 251, 251a, 251b: Function-selection file
- 252: Function-control table

### Mode for Implementing the Invention

An embodiment of the present invention is described below with reference to the drawings.

### <First Embodiment>

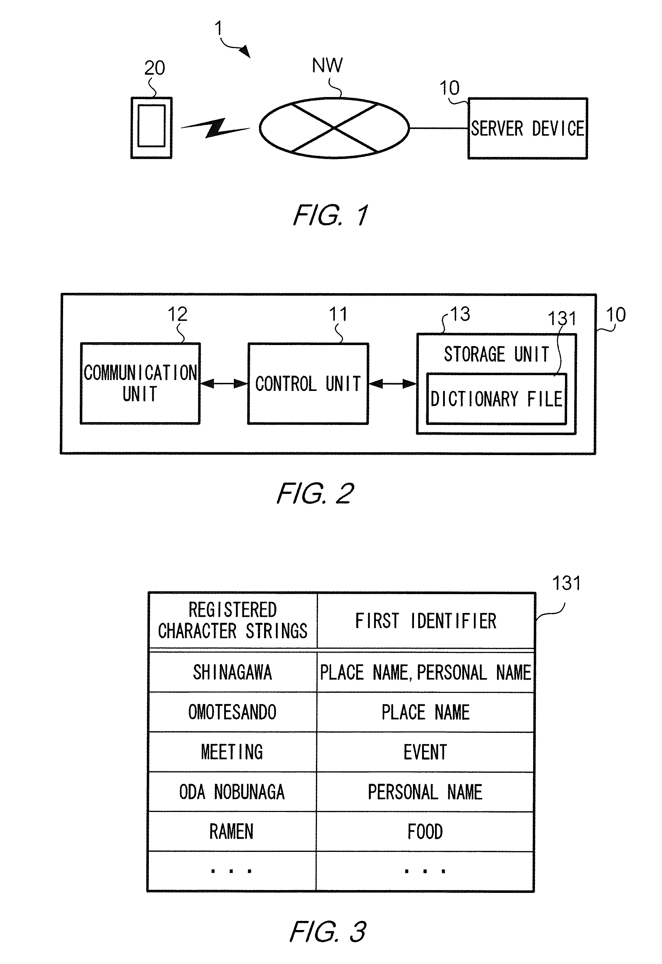

Fig. 1 is a diagram showing an overall configuration of function-presenting system 1.

Function-presenting system 1 is a system for providing a service (hereinafter referred to as "function-presenting service") for estimating and presenting functions that a user of terminal device 20 desires, from among functions that terminal device 20 is able to implement. As shown in Fig. 1, function-presenting system 1 includes server device 10 and terminal device 20. Server device 10 and terminal device 20 are connected via network NW to communicate with each other. In this embodiment, network NW is a communication network including a mobile communication network, a gateway and the Internet.

Terminal device 20 is, in this embodiment, a smart phone. Terminal device 20 detects a sound (it is assumed that the sound is a voice of a user of terminal device 20) and presents functions that are estimated based on the detected sound in the function-presenting service. Server device 10 serves as a voice-recognition server for recognizing a voice detected by terminal device 20. Server device 10 also supports a provision of a function-presenting service based on a result of voice recognition.

It is to be noted that terminal device 20 is not only a smart phone, but also a terminal device including a communication function, such as a cellular phone, personal computer, or Personal Digital Assistant (PDA). Fig. 1 shows only a single terminal device 20; however, function-presenting system 1 actually includes many terminal devices 20.

Fig. 2 is a block diagram showing a configuration of server device 10. As shown in Fig. 2, server device 10 includes control unit 11, communication unit 12, and storage unit 13.

Control unit 11 is a computer including a Central Processing Unit (CPU), a Read Only Memory (ROM), and a Random Access Memory (RAM). The CPU controls various components of server device 10 by loading a program stored in the ROM or storage unit 13 into the RAM and executing the program. Communication unit 12 (a first communication unit) is an interface for connecting with network NW. Storage unit 13 (a first memory) includes, for example, a hard disk device. Storage unit 13 stores data including dictionary file 131 and various programs executed by control unit 11. Dictionary file 131 is a voice-recognition dictionary used for voice recognition. Dictionary file 131 is compiled as described below.

Fig. 3 is a diagram showing dictionary file 131. Dictionary file 131 associates a registered character string that is registered in a dictionary, with an identifier representing a category that is determined based on a meaning of the registered character string.

As shown in Fig. 3, dictionary file 131 includes a table of data items for associating information described in fields "registered character string" and "first identifier" with each other. In the field "registered character string," a character string registered in dictionary file 131 is described. The registered character string is typically a term; however, the registered character string may include any character string (for example, a search term used for information retrieval) such as a compound word. The registered character string may be composed of any characters, such as a kanji character (Chinese character), a hiragana and katakana phonetic character (Japanese character), and a letter of the alphabet. In the field "first identifier," an identifier representing a category that is determined based on a meaning of the registered character string is described. The first identifier is assigned to each registered character string according to a category that is predetermined based on a meaning (or concept) of the registered character string. For example, the first identifier of a registered character string "Omotesando" is a "place name," and the first identifier of a registered character string "meeting" is an "event."

In dictionary file 131, a plurality of first identifiers may be assigned to a single registered character string. For example, the first identifier of a registered character string "Shinagawa" is a "place name, personal name" (a place name and personal name). This is because the character string "Shinagawa" may be interpreted as a place name, and also may be interpreted as a personal name (namely, a Japanese surname). In dictionary file 131, a plurality of first identifiers is described for at least one registered character string.

It is to be noted that the registered character strings and first identifiers shown in Fig. 3 are merely an example. Actually, the dictionary file 131 describes more combinations. For example, the first identifier that results from further subdivision of a "personal name," such as a "stage name," a "pen name," and an "athlete's pseudonym," may be used. In addition, the first identifier does not have to be assigned to all of registered character strings registered in dictionary file 131.

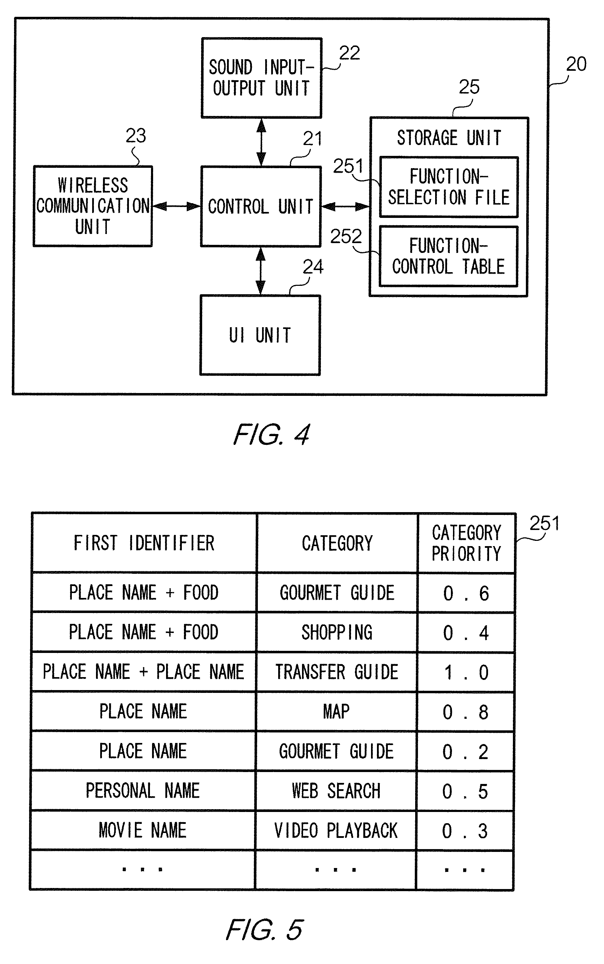

Fig. 4 is a block diagram showing a configuration of terminal device 20. As shown in Fig. 4, terminal device 20 includes control unit 21, sound input-output unit 22, wireless communication unit 23, User Interface (UI) unit 24, and storage unit 25.

Control unit 21 is a computer including a CPU, a ROM, and a RAM. The CPU controls various components of terminal device 20 by loading a program stored in the ROM or storage unit 25 into the RAM and executing the program. Sound input-output unit 22 includes a microphone for receiving a sound such as a speaking voice, and a speaker for outputting a sound transmitted from a phone transmitter. Sound input-output unit 22 implements a function regarding an input and output of a sound. Sound input-output unit 22 detects a user's voice of terminal device 20 by the microphone, and outputs a result of detecting the voice to control unit 21. Wireless communication unit 23 (a second communication unit) includes a wireless communication circuit and an antenna. Wireless communication unit 23 serves as an interface for connecting wirelessly with network NW. UI unit 24 includes a display surface for displaying an image and a touch panel overlapped on the display surface. UI unit 24 provides a Graphical User Interface (GUI). In other words, UI unit 24 serves both as an operation unit for receiving an operation of a user by the touch panel and as a display unit for notifying information by displaying an image on the display surface.

It is to be noted that in terminal device 20, the operation unit and display unit each may be implemented by an independent hardware.

Storage unit 25 (a second memory) includes, for example, Electronically Erasable and Programmable ROM (EEPROM). Storage unit 25 stores data including function-selection file 251, function-control table 252 and various software applications. For example, control unit 21 implements a function of terminal device 20 by executing the software application stored in storage unit 25. The software applications stored in storage unit 25 includes, for example, a mailer, a web browser, a map app for displaying a map, and a video player app for playing a video file, and so on; however, any software application may be included. Also, the software applications may be pre-installed in terminal device 20 or may be installed in terminal device 20 by a user.

It is to be noted that the software applications each describes an algorithm for displaying an icon image to be designated by a user when the user inputs an instruction into terminal device 20 to execute the software application.

Functions that terminal device 20 is able to implement are each implemented by a necessary information process being executed by terminal device 20. A content of the information process at least partly differs for each function. For example, when a Uniform Resource Locator (URL) representing an access destination is different between functions, even if the functions are implemented by execution of the same web browser, the functions are distinguished as being different from each other.

It is to be noted that in terminal device 20, information (such as a URL representing an access destination) required to implement each function is stored in storage unit 25. Control unit 21 implements each function by executing an information process through the use of the information.

Fig. 5 is a diagram showing function-selection file 251. Function-selection file 251 is data storing a correspondence between the first identifier and a function to be presented.

As shown in Fig. 5, function-selection file 251 is a table of data items for associating information described in fields "first identifier," "category," and "category priority" with each other. In the field "first identifier," at least one first identifier (the single first identifier or a combination of a plurality of first identifiers) in common with the first identifier described in dictionary file 131, is described. In the field "category," a category to which a function belongs is described. The category is used as a type of a function that terminal device 20 is able to implement. In the field "category priority," a priority of the category is described. The category priority, which is described in detail later, is a priority referred to in providing a function-presenting service. In this embodiment, the category priority is a value greater than or equal to "0.0" and smaller than or equal to "1.0." The category priority represents that a greater value has a higher category priority.

For example, in function-selection file 251, the first identifier "place name + food" (a place name and food) is associated with a category "gourmet guide" and category priority "0.6," and also is associated with a category "shopping" and a category priority "0.4." In this manner, in function-selection file 251, a category and category priority may be described in association with a combination of a plurality of first identifiers. In addition, in function-selection file 251, the first identifier "place name" is associated with a category "map" and category priority "0.8," and also is associated with a category "gourmet guide" and category priority "0.2." In function-selection file 251, a category having a strong relation to a meaning of a registered character string represented by the first identifier is associated with the first identifier, and, for example, a stronger relation has a higher category priority.

A combination of a plurality of first identifiers may include a plurality of identical first identifiers such as "place name + place name." The first identifier "place name + place name" is associated with a category "transfer guide." This is because it is considered that when an input character includes two registered character strings each having a meaning of a place name, for example, a user may designate a departure point and an arrival point for information on transferring trains.

It is to be noted that the first identifiers, categories, and category priorities shown in Fig. 5 are merely an example. Actually, function-selection file 251 describes more combinations. In addition, in function-selection file 251, the sum of category priorities corresponding to the identical first identifier is "1.0." A category to which each function belongs to is determined at a stage such as a design stage of function-presenting system 1.

The foregoing function-selection file 251, which is described in detail later, is data referred to by terminal device 20 in selecting functions that are to be presented in a predetermined manner.

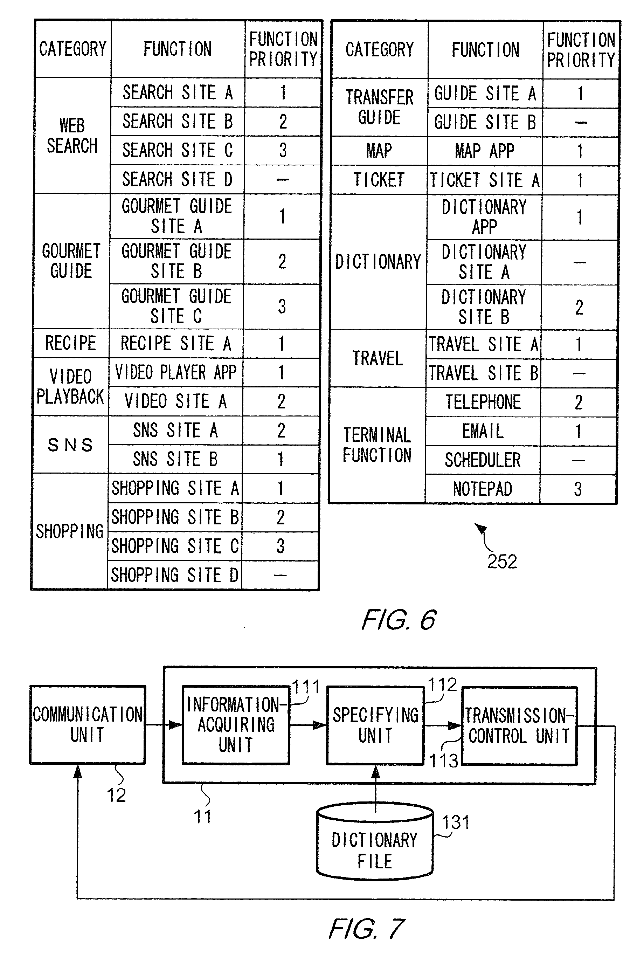

Fig. 6 is a diagram showing function-control table 252. Function-control table 252 is a table of data items for describing a correspondence between a function that terminal device 20 is able to implement and a category to which the function belongs.

As shown in Fig. 6, function-control table 252 associates information described in fields "category," "function," and "function priority" with each other. In the field "category," information in common with that described in function-selection file 251 is described. In the field "function," information for identifying a function that terminal device 20 is able to implement is described. For example, a function identified by information including "site" that is described in the field "function" is implemented by execution of a web browser. In the field "function priority," a priority of the function is described. The function priority, which is described in detail later, is a priority referred to in presenting functions in a function-presenting service. In this embodiment, the function priority is a priority order that is separately assigned to each function in categories. The function priority means that a smaller value has a higher priority. It is assumed that a function to which no function priority is set (a function having a function priority "-" (a hyphen) in Fig. 6) is removed from the subject of presentation in a function-presenting system, although terminal device 20 is able to implement the function. In this manner, in this embodiment, some functions that terminal device 20 is able to implement are set to be removed from the subject of presentation; however, in another embodiment, all of the functions that terminal device 20 is able to implement may be set to be the subject of presentation.

The function priorities of foregoing function-control table 252 may be updated by terminal device 20 according to a user setting and so on. In function-control table 252, a function priority may be set to all of the functions.

A functional configuration of function-presenting system 1 is described below.

Fig. 7 is a block diagram showing a functional configuration of control unit 11 of server device 10. As shown in Fig. 7, control unit 11 implements functions corresponding to information-acquiring unit 111, specifying unit 112, and transmission-control unit 113 by executing a program.

Information-acquiring unit 111 acquires input information input into terminal device 20 via communication unit 12. The input information is, for example, sound information representing a voice (for example, a speech waveform) detected by terminal device 20.

Specifying unit 112 specifies, with reference to dictionary file 131, an input character string represented by the input information acquired by information-acquiring unit 111 and the first identifier of a registered character string corresponding to the input character string. When the input information is the sound information, specifying unit 112 recognizes the sound information with reference to dictionary file 131, and specifies a recognized input character string and the first identifier of a registered character string corresponding to the input character string. Specifying unit 112 specifies from dictionary file 131, for each registered character string, all the one or more first identifiers that is/are associated with a registered character string included in the input character string. In this embodiment, the input character string is represented by a text code.

Transmission-control unit 113 controls communication unit 12 to transmit to terminal device 20 a set of the input character string and the first identifier that is specified for a registered character string corresponding to the input character string by specifying unit 112.

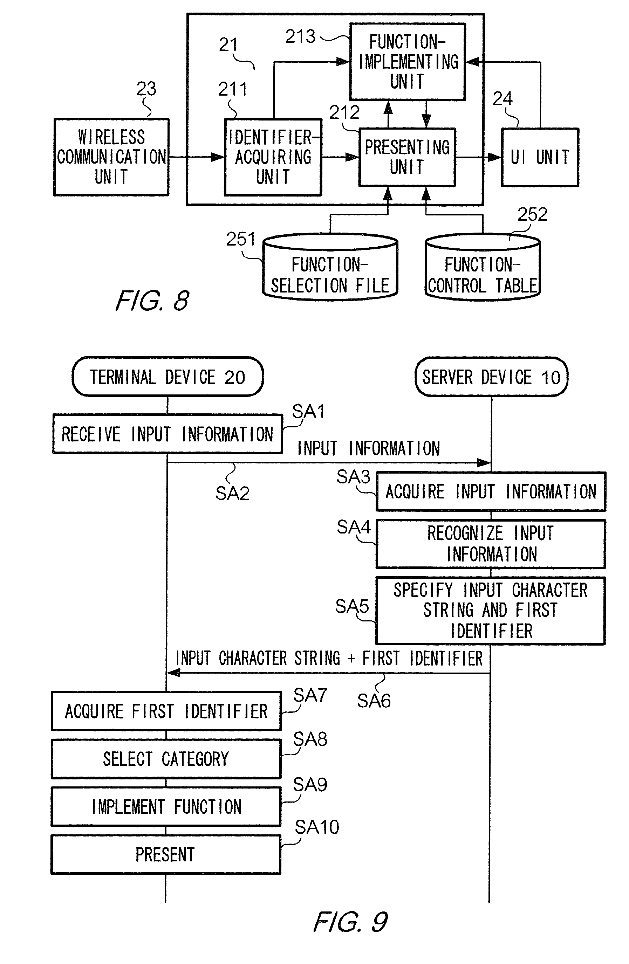

Fig. 8 is a block diagram showing a functional configuration of control unit 21 of terminal device 20. As shown in Fig. 8, control unit 21 implements functions corresponding to identifier-acquiring unit 211, presenting unit 212, and function-implementing unit 213 by executing a program.

Identifier-acquiring unit 211 acquires a set of the input character string and the first identifier of a registered character string corresponding to the input character string, the set being transmitted from server device 10 by the control of transmission-control unit 113 and being received via wireless communication unit 23, and acquires the first identifier from the set.

Presenting unit 212 presents, with reference to function-selection file 251 and function-control table 252, in a predetermined manner a plurality of functions that are determined to be the subject of presentation based on the first identifier acquired by identifier-acquiring unit 211. For example, presenting unit 212 presents a plurality of functions that are determined to be the subject of presentation based on the first identifier acquired by identifier-acquiring unit 211, by displaying the plurality of functions on UI unit 24 prior to another function.

It is to be noted that the first identifier acquired by identifier-acquiring unit 211 is identical to the first identifier specified by specifying unit 112.

Function-implementing unit 213 implements a function that satisfies a determined condition of a plurality of functions presented by presenting unit 212. For example, function-implementing unit 213 implements a single function of the plurality of functions presented by presenting unit 212 without receiving an instruction input by a user to implement the function. Presenting unit 212 presents a plurality of functions to be presented and a result of implementing the function by function-implementing unit 213.

Function-implementing unit 213 serves to perform a control regarding implementing of a function in terminal device 20. For example, when a user inputs an instruction to implement a function by an operation of UI unit 24 or by voice, function-implementing unit 213 implements the function. In another embodiment, for example, since it is considered that a user may not desire to start to implement a function automatically, function-implementing unit 213 may implement a function according to an instruction to implement the function upon receiving the instruction input by a user based on the plurality of functions presented by presenting unit 212. Function-implementing unit 213 may implement a function by using a whole or a part of an input character string, or may implement a function without using an input character string.

An operation of function-presenting system 1 is described below.

Fig. 9 is a sequence diagram showing an operation of function-presenting system 1.

When a user inputs an instruction to use a function-presenting service by an operation of UI unit 24, control unit 21 of terminal device 20 starts to receive a voice input. The user of terminal device 20 utters a term related to a function that the user desires to use. In this embodiment, it is assumed that the user desires to look up information on a ramen restaurant located in Shinagawa Ward, and utters a term "Shinagawa" and a term "ramen." Control unit 21 receives by sound input-output unit 22 a voice input in response to the user's voice "Shinagawa" and "ramen," and receives sound information representing the voice as input information (step SA1).

Control unit 21 of terminal device 20 controls wireless communication unit 23 to transmit to server device 10 the input information, which is the sound information (step SA2).

Control unit 11 of server device 10 acquires the input information, which is the sound information, via communication unit 12 (step SA3). Control unit 11 subsequently recognizes the sound information with reference to dictionary file 131 (step SA4), and specifies a recognized input character string and the first identifier of a registered character string corresponding to the input character string (step SA5). As shown in Fig. 3, in dictionary file 131, the first identifier "place name, personal name" is assigned to the registered character string "Shinagawa," and the first identifier "food" is assigned to the registered character string "ramen." Accordingly, control unit 11 acquires data "Shinagawa <place name, personal name>" and "ramen <food>."

It is to be noted that data in a format "AA <BB>" means that the first identifier of a registered character string "AA," which is included in an input character string, is "BB." However, this data format is merely an example. Another data format may be used if a relation between a registered character string and the first identifier is clear.

Control unit 11 subsequently controls communication unit 12 to transmit to terminal device 20 a set of the input character string and the first identifier, the first identifier being specified for the registered character string that is included in the input character string (step SA6).

Upon receiving via wireless communication unit 23 the set of the input character string and the first identifier of the registered character string included in the input character string, control unit 21 of terminal device 20 acquires the first identifier from this set (step SA7). In this embodiment, since control unit 11 acquires from server device 10 data "Shinagawa <place name, personal name>" and "ramen <food>," control unit 11 acquires data "place name, personal name + food" as the first identifier.

It is to be noted that in this embodiment, the first identifier specified from one single registered character string is distinguished from the first identifier specified from another registered character string by use of a symbol "+."

Control unit 21 subsequently selects, with reference to function-selection file 251, a category to which functions belongs that are determined to be the subject of presentation based on the first identifier acquired in the process of step SA7 (step SA8).

In this embodiment, control unit 21 selects a category associated with the first identifier that matches the first identifier "place name, personal name + food" in function-selection file 251. In making a selection, control unit 21 selects a category associated with the fully matched first identifier prior to a category associated with the partially matched first identifier. "Fully matched" referred to here means that function-selection file 251 describes a combination of first identifiers specified by server device 10. On the other hand, "partially matched" referred to here means that function-selection file 251 describes the first identifier that forms a part of the combination of first identifiers specified by server device 10. In this embodiment, as shown in Fig. 5, function-selection file 251 describes the first identifier "place name + food" that fully matches the first identifier "place name, personal name + food" specified by server device 10. In addition, function-selection file 251 describes the first identifier "place name" that partially matches the first identifier "place name, personal name + food" specified by server device 10.

Accordingly, control unit 21 selects categories "gourmet guide," "shopping," and "map," and also specifies category priorities "0.6," "0.4," and "0.8" for the respective categories.

It is to be noted that although a category "gourmet guide" is selected based on both the first identifiers "place name + food" and "place name," in this case, control unit 21 may employ data having a higher category priority.

Control unit 21 subsequently implements a function that belongs to the category selected in the process of step SA8 and that satisfies a predetermined condition (step SA9). In this embodiment, control unit 21 implements a single function without receiving any instruction input by a user to implement the function, the function being determined based on a number of the first identifiers that match between the first identifier specified by server device 10 and the first identifier described in function-selection file 251, the category priority, and the function priority. Control unit 21 implements a function having the greatest number of matched first identifiers, the highest category priority, and the highest function priority. As already explained above, in this embodiment, categories having the greatest number of matched first identifiers is a "gourmet guide" and "shopping," and a category having the highest category priority is a "gourmet guide." A function having the highest function priority of functions belonging to the category "gourmet guide" is a "gourmet guide site A." Accordingly, control unit 21 searches information in "gourmet guide site A" using search terms "Shinagawa" and "ramen" as a search term.

It is to be noted that control unit 21 may use all of registered character strings corresponding to an input character string, or may use some of the registered character strings. In addition, control unit 21 may implement a function using a whole of an input character string, or may implement a function without using the input character string.

Control unit 21 subsequently presents a plurality of functions belonging to the category selected in the process of step SA8 in a predetermined presenting method, and also presents a result of implementing the function according to the process of step SA9 (step SA10). In this embodiment, control unit 21 determines to be the subject of presentation all functions to each of which a function priority is set in function-control table 252 shown in Fig. 6, and presents functions prior to another function, the functions belonging to the category selected in the process of step SA8 and also being the subject of presentation based on the first identifier. Since control unit 21 selects three categories "gourmet guide," "shopping," and "map" in the process of step SA8, control unit 21 presents seven functions "gourmet guide site A" to "gourmet guide site C," "shopping site A" to "shopping site C," and "map app" in this order prior to another function. Specifically, control unit 21 controls UI unit 24 to display a function-presenting screen. On the function-presenting screen, icon images are arranged, the icon images corresponding to the functions determined to be the subject of presentation based on the first identifier, in a manner corresponding to the number of first identifiers that match between the first identifier specified by server device 10 and the first identifier described in function-selection file 251, the category priority, and the function priority. On the function-presenting screen, a result of implementing the function in the process of step SA9 is also displayed. When a user designates an icon image by an operation of UI unit 24, control unit 21 implements a function corresponding to the icon image.

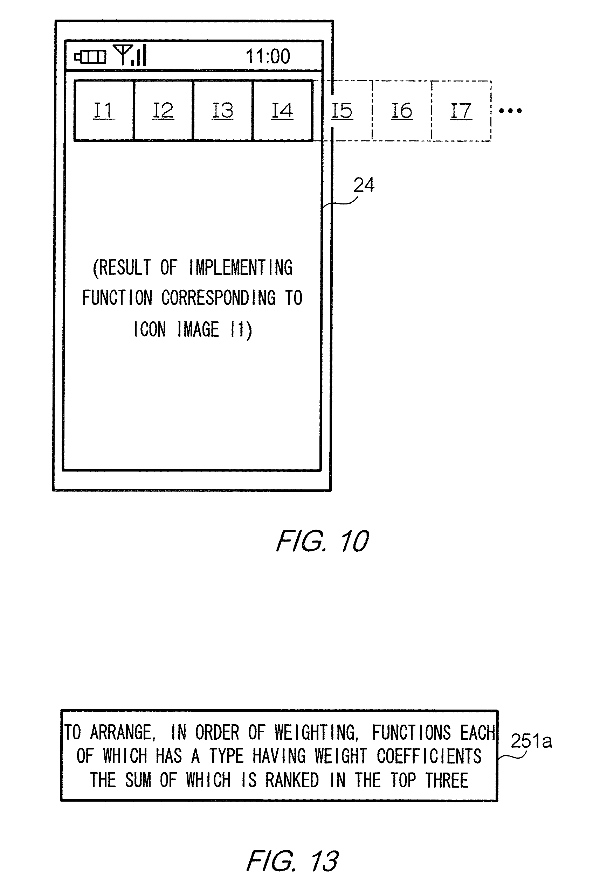

Fig. 10 is a diagram showing a function-presenting screen.

In Fig. 10, icon images I1 to I7 correspond to functions presented prior to another function. Since icon images I1 to I4 are displayed on the display screen when the function-presenting screen is displayed, the user can view and designate these icon images without operating UI unit 24 to transit the screen. On the other hand, icon images I5 to I7 shown by dotted lines are hidden when the function-presenting screen is displayed. These icon images are displayed by an operation of UI unit 24 performed by a user to transit the screen (for example, a flick operation). Icon images I1 to I7 are arranged in a decreasing order of the number of matched first identifiers, and then in a decreasing order of category priority, and then in a decreasing order of function priority. Namely, icon images I1 to I7 are arranged in the order of "gourmet guide site A" to "gourmet guide site C," "shopping site A" to "shopping site C," and "map app." Accordingly, a user can designate an icon image of a function having the greater number of matched first identifiers, the higher category priority or the higher function priority with reduced input operation.

Control unit 21 also displays all the rest of the icon images, to each of which a function priority is set in function-control table 252, on the right of icon image I7; namely, a position requiring greater amount of operation to display the icon images than that required to display icon images I1 to I7. In this manner, control unit 21 arranges icon images corresponding to functions other than functions that are determined to be the subject of presentation based on the first identifier, regardless of the category priority and function priority. For example, control unit 21 may employ such an arrangement that the icon images are arranged in the order in which corresponding functions are described in function-control table 252, or may employ an arrangement predetermined at a stage such as a design stage, or may employ an arrangement reflecting a history of use by a user (for example, an icon image corresponding to a function that is used a greater number of times or at a higher frequency is displayed to the left in Fig. 10). In this embodiment, control unit 21 presents, according to the number of the matched first identifiers, the category priority, and the function priority, only a function that is determined to be the subject of presentation based on the first identifier.

It is to be noted that control unit 21 may employ a presenting method for presenting only a function that is determined to be the subject of presentation based on the first identifier, and for hiding another function. In this case, only icon images I1 to I7 are displayed on the function-presenting screen. In summary, control unit 21 presents, according to a predetermined presenting method, at least a function that is determined to be the subject of presentation based on the first identifier.

In addition, on the function-presenting screen, a result of implementing the function by control unit 21 in the process of step SA9 is displayed, together with the icon images, in an area under the icon images. The result of implementing the function should be a result of implementing a function corresponding to icon image I1, namely "gourmet guide site A" in this embodiment. Accordingly, a user can quickly check the result of implementing a function, the function being estimated by function-presenting system 1 that a user most desires to use.

According to the first embodiment described above, server device 10 recognizes input information input into terminal device 20 with reference to dictionary file 131, and specifies an input character string and the first identifier of a registered character string corresponding to the input character string. Terminal device 20 presents a plurality of functions based on the first identifier, which is provided from server device 10, function-selection file 251, and function-control table 252. In this function-presenting system 1, in view of various possible purposes of use of terminal device 20 that a user requests, multiple candidate functions are displayed that are estimated to be useful for a user, instead of displaying only a single function that appears to be preferable for a user. In addition, terminal device 20 displays a function-presenting screen in a manner corresponding to a number of the matched first identifiers, category priority, and function priority. Accordingly, terminal device 20 can present a plurality of the selected functions and a result of implementing a function such that a reduced burden is placed on a user to perform an operation to designate a function that it is estimated that a user most desires to use.

In addition, function-presenting system 1 specifies the first identifier with reference to dictionary file 131, without applying a complicated analytical process, such as parsing, to an input character string. In this manner, since function-presenting system 1 requires no parsing and no process for referring to a database to specify the first identifier after acquiring an input character string, an increased time period from when input information is input into terminal device 20 to when functions are presented is avoided. Further since function-presenting system 1 does not require a reference to many data tables in specifying the first identifier, and also independently specifies the first identifier of a registered character string included in an input character string, specification of one first identifier is not influenced by a status of definition of another identifier. Accordingly, function-presenting system 1 can provide a function-presenting service that accurately reflects an original meaning of each registered character string included in an input character string.

### <Modifications of First Embodiment>

The foregoing first embodiment may be modified according to modifications (1-1) to (1-6) described below. The following modifications may be combined with each other.

### (1-1) Determination of Match

When server device 10 specifies the first identifier (for example, specifies only a "place name") that forms a part of a combination of first identifiers (for example, "place name + food") described in function-selection file 251, function-presenting system 1 may treat the first identifiers as being partially matched. In this case, control unit 21 amends a category priority for a category associated with the partially matched first identifier in function selection file 251 such that the category priority is reduced. For example, control unit 21 reduces a category priority to half for a category associated with a partially matched first identifier. Accordingly, when an input character string is "Shinagawa, ramen," control unit 21 sets category priorities for categories "gourmet guide," "shopping," and "map" to "0.6," "0.4," and "0.4," respectively.

It is to be noted that control unit 21 may vary a method for amending a category priority based on an extent of a partial match. For example, control unit 21 amends a category priority for a category associated with a lower extent of a partial match so as to reduce to a greater extent.

### (1-2) Function-presenting Screen

A function-presenting screen displayed in function-presenting system 1 may be modified as described below.

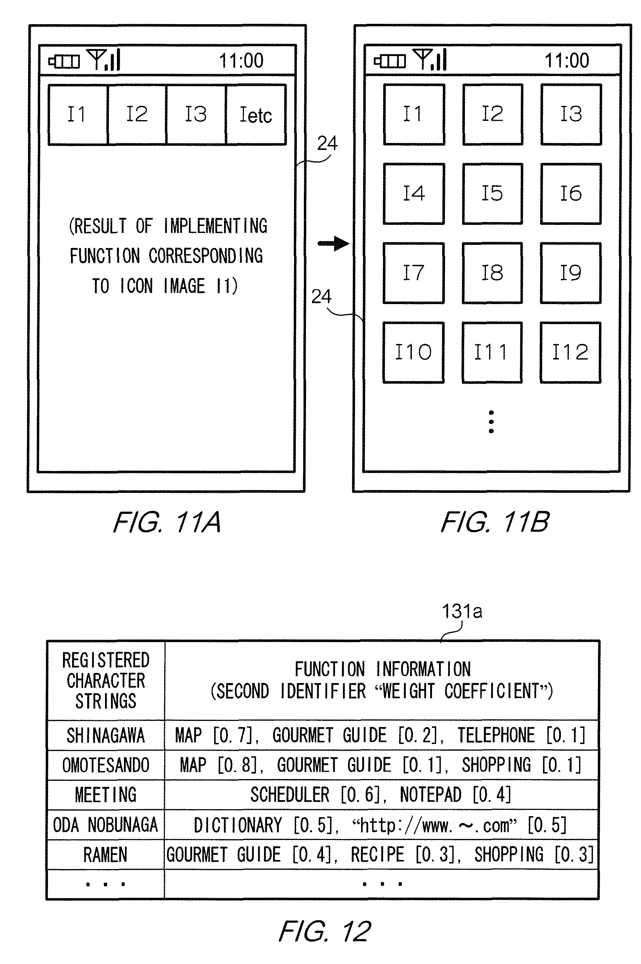

Fig. 11 is a diagram showing another embodiment of a function-presenting screen.

In the function-presenting screen shown in Fig. 10, when a number of icons to be presented increases, a great amount of operation is required for a user to display an icon image of a function having a smaller number of the matched first identifier, a lower category priority, or a lower function priority Control unit 21 therefore controls UI unit 24 to display firstly the function-presenting screen shown in Fig. 11 A. Icon images I1 to I3 are the same as that shown in Fig. 10. When a user designates icon image Ietc displayed on the right of icon images I1 to I3, control unit 21 makes a transition to a function-presenting screen shown in Fig. 11B. In this function-presenting screen, control unit 21 displays icon images by using almost the whole of display screen of UI unit 24, without displaying a result of implementing a function. According to this function-presenting screen, a greater number of icon images can be displayed on the display screen than on the function-presenting screen shown in Fig. 10. This makes it easy for a user to designate an icon image of a function belonging to a category having a low category priority. In the function-presenting screen shown in Fig. 11B, control unit 21 may arrange icon images according to a rule similar to that applied to the function-presenting screen shown in Fig. 10, or may arrange icon images regardless of this rule. Control unit 21 may employ any arrangement for arranging icon images in the function-presenting screen shown in Fig. 11B.

It is to be noted that although icon images corresponding to functions are displayed in function-presenting screen shown in Fig. 11A, control unit 21 may display icon images each corresponding to a category to which a function to be presented belongs. In this case, the icon images may be arranged in a descending order according to a number of the matched first identifier, and then in a descending order according to a category priority. When a user designates an icon image corresponding to any one of categories, control unit 21 may display an icon image of each function belonging to the designated category in function-presenting screen shown in Fig. 11B.

It is to be noted that control unit 21 may display a function-presenting screen as shown in Fig. 10 if a number of functions to be presented is smaller than a threshold, and may display a function-presenting screen as shown in Fig. 11 if the number of functions is greater than or equal to the threshold.

It is to be noted that the foregoing manner of arrangement of icon images in the function-presenting screen is merely an example. A number of icons displayed on the display surface at once and positions of the icons are not limited to the manner described above.

### (1-3) Timing at which Function Is Implemented

In function-presenting system 1 according to the foregoing first embodiment, control unit 21 of terminal device 20 implements a function corresponding to icon image I1 without an instruction input by a user; while control unit 21 implements another function when a user designates an icon image. However, instead of this operation, control unit 21 may implement in the background in advance functions that correspond to icon images I2 to I7 and that are not implemented in the process of step SA9 of functions that are determined to be the subject of presentation based on the first identifier. According to this operation, control unit 21 can quickly present the result of an implementation when a user designates an icon image. In this case, control unit 21 may implement in the background in advance some functions, such as functions each having a category priority or function priority greater than a certain level (for example, in the top three), of functions whose icon images are presented.

It is to be noted that when implementing a function in the background, the function requiring communications, such as a function for displaying a web site by executing a web browser, control unit 21 executes an software application program corresponding to the function, and also downloads data required to implement the function and caches the data. On the other hand, control unit 21 (function-implementing unit 213) loads into RAM a software application corresponding to a function other than the function requiring communications. A method for implementing a function in the background is not limited to the foregoing method, if a time required for implementing the function can be shorter than that of a case where control unit 21 starts to implement the function after an icon image is designated. Control unit 21 may execute a part of the information process required to implement the function in advance.

### (1-4) Application of Weight Coefficient for First Identifier

In function-presenting system 1, a weight coefficient of a category represented by the first identifier may be associated with this first identifier described in dictionary file 131. In this case, the first identifier associated with a great weight coefficient is of importance in function-presenting system 1. For example, if a registered character string "Shinagawa" has a low visibility as a place name, but has a high visibility as a personal name, a weight coefficient of the place name is set to "0.3," and a weight coefficient of the personal name is set to "1.0." Control unit 11 of server device 10 associates the first identifier with the weight coefficient when control unit 11 transmits the first identifier to terminal device 20. Terminal device 20 acquires the weight coefficient together with the first identifier, and calculates a final category priority by applying the weight coefficient to a category priority of a category specified from this first identifier (in this embodiment, by multiplying).

When server device 10 specifies the first identifier "place name," terminal device 20 operates as described below.

Control unit 21 of terminal device 20 calculates a category priority "0.24" by multiplying a category priority "0.8"of a map by a weight coefficient "0.3" of a place name. Control unit 21 calculates a category priority "0.06" by multiplying a category priority "0.2" of a gourmet guide by a weight coefficient "0.3" of a place name. Control unit 21 calculates a category priority "0.5" by multiplying a category priority "0.5 of a web search by a weight coefficient "1.0" of the personal name. According to this operation, a relation of the category priorities becomes "web search" > "map" > "gourmet guide." Meanwhile, in a case where the foregoing weight coefficient is not used, since a category priority of the web search is "0.5," a category priority of the map is "0.8," and a category priority of the gourmet guide is "0.2," a relation of the category priorities becomes "map" > "web search" > "gourmet guide." This is a different result from that of a case where terminal device 20 applies a weight coefficient to the first identifier.

As described above, in function-presenting system 1, it is also possible to vary a presenting manner of a category depending on the presence of a weight coefficient corresponding to the first identifier or a degree of weighting. In this embodiment, although a greater weight coefficient is determined if a registered character string has a subject meaning having higher visibility, a weight coefficient may be determined according to another index.

### (1-5) Functional Category

In function-presenting system 1, although a category (functional category) to which a function belongs is used as a type of a function, the function per se may be used instead of the category. In this case, terminal device 20 may specify, with reference to data integrating a content of function-selection file 251 with a content of function-control table 252, a function that is determined to be the subject of presentation based on the first identifier, the first identifier being specified from an input character string.

### (1-6) Function Priority

In function-presenting system 1, a function priority may be quantified like a category priority such that the greater value has the higher priority. In this case, terminal device 20 may calculate a priority for each function by applying a function priority to a category priority that is specified in function-selection file 251 shown in Fig. 5 (for example, by multiplying), and may use the calculated priority instead of the foregoing function priority.

### <Second Embodiment>

The second embodiment of the present invention is described below.

In function-presenting system 1 of the second embodiment, a dictionary file and a function-selection file differ from those of the foregoing first embodiment. In accordance with this difference, a configuration and an operation of server device 10 and terminal device 20 also differ from those of the foregoing first embodiment. In the following description, an element in common with that of the first embodiment of elements of function-presenting system 1 according to the second embodiment is represented using the same reference numeral as that used in the first embodiment, and the description and references to figures of the element may be omitted. An element corresponding to that of the first embodiment is represented by adding character "a" at the end of a reference numeral, and the description thereof may be omitted.

Server device 10 stores dictionary file 131a used as a voice-recognition dictionary in storage unit 13.

Fig. 12 is a diagram showing dictionary file 131a.

As shown in Fig. 12, dictionary file 131a is a table of data items for associating information described in fields "registered character string" and "function information." In the filed "registered character string," similar to dictionary file 131, a character string registered in dictionary file 131a is described. In the field "function information," a set of the second identifier and a weight coefficient is described. The second identifier represents, as a category of a registered character string, a type of a function determined for the registered character string. The type of the function may indicate a category to which the function belongs, as described in the foregoing first embodiment, or may indicate the function per se. In the example shown in Fig. 12, information "map" or "gourmet guide" corresponds to a category, and information "scheduler" or "notepad" corresponds to a function per se.

In Fig. 12, function information is described in a data format "AA [BB]." This means that a weight coefficient "BB" is assigned to the second identifier "AA," which is a type of a function. In the fourth line of Fig. 12, information "http://www.∼.com" is described. This information means a URL of a web site for providing information related to a registered character string. This information is address information referred to in web browsing, and corresponds to information representing a function per se. The weight coefficient is, in this embodiment, a value greater than or equal to "0.0" and smaller than or equal to "1.0." The weight coefficient represents that a greater value has a greater weighting of a type of a function. In dictionary file 131 a, a weight coefficient is assigned such that the sum of weight coefficients corresponding to each registered character string is "1.0."

In dictionary file 131a, the second identifier that represents a type of a function, the function having a strong relation with a meaning of a registered character string is associated with the registered character string. For example, a greater weight coefficient is assigned to a function having a stronger relation. It is to be noted that function information does not have to be assigned to all of registered character strings registered in dictionary file 131a.

Fig. 13 is a diagram showing function-selection file 251a.

Terminal device 20 stores in storage unit 25 function-selection file 251a that describes a correspondence between the second identifier specified from an input character string and a function to be presented. As shown in Fig. 13, in function-selection file 251a a content "to arrange, in order of weighting, functions each of which has a type having weight coefficients the sum of which is ranked in the top three" is described. However, this content of function-selection file 251a is merely an example. This content may include a condition in which the sum of weight coefficients is ranked in the top five, or may be set by a user. In this manner, function-selection file 251a is data describing a rule for determining a function to be presented based on function information of a registered character string corresponding to an input character string.

The foregoing function-selection file 251a, which is described in detail later, is data referred by terminal device 20 in selecting a function to be presented in a predetermined presenting method.

A functional configuration of control unit 11 is described below. A difference from the functional configuration of the foregoing first embodiment is mainly described herein.

Information-acquiring unit 111 acquires input information input into terminal device 20 via communication unit 12. Specifying unit 112 specifies, with reference to dictionary file 131a, an input character string represented by the input information, the input information being acquired by information-acquiring unit 111, and function information (namely, a second identifier and weight coefficient) of a registered character string corresponding to the input character string. When the input information is the sound information, specifying unit 112 recognizes the sound information with reference to dictionary file 131 a, and specifies a recognized input character string and function information of a registered character string corresponding to the input character string. Transmission-control unit 113 controls communication unit 12 to transmit to terminal device 20 a set of the input character string and the function information that is specified by specifying unit 112 for a registered character string corresponding to the input character string.

Another function of control unit 11 is the same as that of the foregoing first embodiment.

A functional configuration of control unit 21 is described below. A difference from the functional configuration of the foregoing first embodiment is mainly described herein.

Identifier-acquiring unit 211 acquires the set of the input character string and the function information of the registered character string corresponding to the input character string, the set being received via wireless communication unit 23, and acquires the function information from the set.

Presenting unit 212 presents, with reference to function-selection file 251a and function-control table 252, in a predetermined manner a plurality of functions that are determined to be the subject of presentation based on the function information acquired by identifier-acquiring unit 211. For example, presenting unit 212 presents a plurality of functions that are determined based on the function information acquired by identifier-acquiring unit 211 and a content described in function-selection file 251 a, prior to another function.

Another function of control unit 21 is the same as that of the foregoing first embodiment.

An operation of function-presenting system 1 is described below.

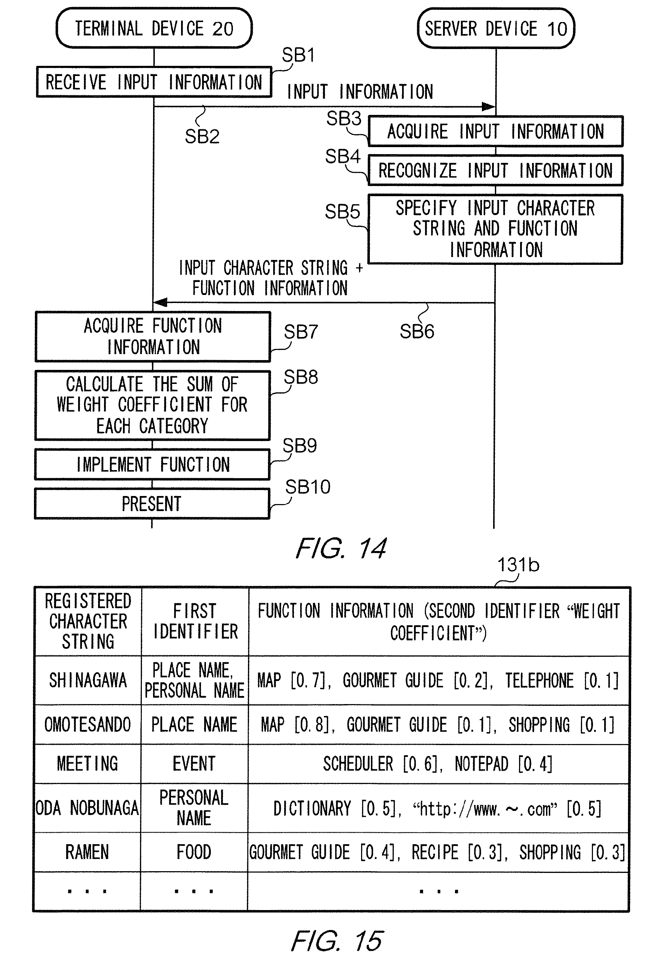

Fig. 14 is a sequence diagram showing the operation of function-presenting system 1. The description of process steps SB1 to SB3 shown in Fig. 14 is omitted since these process steps are the same as process steps SA1 to SA3 of the foregoing first embodiment. In the following description, it is assumed that a user inputs by voice the terms "Shinagawa" and "ramen."

Control unit 11 of server device 10 recognizes sound information with reference to dictionary file 131a (step SB4), and specifies a recognized input character string and function information of a registered character string corresponding to the input character string (step SB5). As shown in Fig. 12, in dictionary file 131 a, a registered character string "Shinagawa" is associated with function information "map [0.7]," "gourmet guide [0.2]," and "telephone [0.1]," and a registered character string "ramen" is associated with function information "gourmet guide [0.4]," "recipe [0.3]," and "shopping [0.3]."

Control unit 11 subsequently controls communication unit 12 to transmit to terminal device 20 a set of the input character string and the function information that is specified for the registered character string included in the input character string (step SB6).

Upon receiving via wireless communication unit 23 the set of the input character string and the function information that is specified for the registered character string included in the input character string, control unit 21 of terminal device 20 acquires the function information from this set (step SB7). In this embodiment, control unit 21 acquires the function information <"map [0.7]," "gourmet guide [0.2]," and "telephone [0.1]"> and <"gourmet guide [0.4]," "recipe [0.3]," and "shopping [0.3]">.

Control unit 21 subsequently calculates, with reference to function-selection file 251a, the sum of weight coefficients for each type of a function (step SB8). In this embodiment, control unit 21 calculates values <"map [0.7]," "gourmet guide [0.6]," "recipe [0.3]," "shopping [0.3], and telephone [0.1]">.

Control unit 21 subsequently implements a function that satisfies a predetermined condition, the function being included in functions each of which has a type for which a weight coefficient is calculated in the process of step SB8 (step SB9). In this embodiment, control unit 21 implements a function that has a type with the greatest weight coefficient. If the type of the function having the greatest weight coefficient is a category, control unit 21 implements a function having the highest function priority of functions belonging to the category. As for the rest, control unit 21 may perform the same process as the process of step SA9 of the first embodiment.

Control unit 21 subsequently presents, with reference to function-selection file 251a and function-control table 252, functions in the predetermined presenting method, the functions being determined to be the subject of presentation based on the function information acquired in step SB7, and also presents the result of implementing a function according to the process of step SB9 (step SB 10). In this embodiment, control unit 21 determines to be the subject of presentation all functions to each of which a function priority is set in function-control table 252 shown in Fig. 6, and also presents the functions that are determined to be the subject of presentation prior to another function. In this embodiment, control unit 21 controls UI unit 24 to display a function-presenting screen according to the content "to arrange, in order of weighting, functions each of which has a type having weight coefficients the sum of which is ranked in the top three" described in function-selection file 251a. On the function-presenting screen, icon images of the functions, each of which has a type having weight coefficients the sum of which is ranked in the top three (namely, the functions belonging to categories "gourmet guide," "shopping," and "map") are arranged in a decreasing order of the sum of weight coefficients, and then a decreasing order of the function priorities. Control unit 21 also arranges on the function-presenting screen icon images of functions other than the functions to each of which a function priority is set in function-control table 252, regardless of the function priority or the sum of weight coefficients.

It is to be noted that in the second embodiment, control unit 21 may employ a presenting method for presenting only an icon image of a function that satisfies a condition defined in function-selection file 251a, and for hiding another function to which a function priority is set in function-control table 252. In summary, control unit 21 may present, according to a predetermined presenting method, at least one function that is determined to be the subject for presentation based on function information.

Function-presenting system 1 described in the second embodiment differs from that of the foregoing first embodiment in using a type of a function that is predetermined in a registered character string as a category of the registered character string. Accordingly, if a weight coefficient is set such that a great weight coefficient is assigned to a correspondence between a registered character string and a type of a function, the correspondence being a combination that is used by many users, function-presenting system 1 can provide a function-presenting service based on a statistic of an actual situation of use by many users. In addition, since dictionary file 131a is controlled by server device 10, even if a preferred function varies from hour to hour in response to an input character string, function-presenting system 1 can present a function based on a present situation by adjusting dictionary file 131a in server device 10.

In addition to the effects described above, function-presenting system 1 according to the second embodiment achieves an effect similar to that of the first embodiment.

### <Modifications of Second Embodiment>

The foregoing second embodiment may be modified according to modifications (2-1) to (2-3) described below. The following modifications may be combined with each other. (2-1) In function-presenting system 1, control unit 21 may vary a weight coefficient based on an importance of each registered character string, instead of using a weight coefficient described in dictionary file 131a without change, and then may calculate the sum of weight coefficients. For example, when a registered character string "ramen" is two times as important as a registered character string "Shinagawa," control unit 21 doubles a weight coefficient of the registered character string "ramen," and then calculates the sum of weight coefficients. In this case, control unit 21 performs an addition using values <"map [0.7]," "gourmet guide [0.2]," and "telephone [0.1]"> and <"gourmet guide [0.8]," "recipe [0.6]," and "shopping [0.6]">. Therefore, in the process of step SB 10, functions of categories "gourmet guide," "map," and "recipe" are preferentially presented in this order.

The importance of each registered character string may be set by an administrator of server device 10 or a user of terminal device 20, or may be calculated by server device 10 or terminal device 20 by using an index showing, for example, a rarity of a registered character string input in an input character string (for example, a registered character string that is less likely to be used as an input character string), or a Term Frequency-Inverse Document Frequency (tf-idf). The tf-idf is a kind of a weighting regarding a term in a document. Although the tf-idf is mainly used in a field such as information retrieval and sentence summarization; in this embodiment, the tf-idf may be calculated, for example, by using an input character string that has been input in the past. Accordingly, a low importance is set for a registered character string that is used frequently such as a term "Omotesando"; while a high importance is set for a registered character string that is used rarely, such as a name of a shop.

(2-2) Although function-presenting system 1 adds up weight coefficients for each type of a function, function-presenting system 1 may add up a weight coefficient of a function and a weight coefficient of a category to which the function belongs; for example, a weight coefficient of a category "gourmet guide" and a weight coefficient of a function "gourmet guide site A." Although function-presenting system 1 according to the second embodiment presents a function based on the sum of weight coefficients, function-presenting system 1 may present a function by using a well-known method for reflecting weighting instead of this method.
(2-3) In function-presenting system 1, either a category to which a function belongs or the function per se may be used as a type of a function.

### <Third Embodiment>

The third embodiment of the present invention is described below.

The third embodiment presents a function by alternatively employing the "first presenting method" for presenting a function based on the first identifier as described in the foregoing first embodiment, or the "second presenting method" for presenting a function based on the function information (a second identifier) as described in the foregoing second embodiment. The first and the second presenting methods have algorithms similar to those of the first and the second embodiments described above. In the following description, an element in common with that of the first embodiment of function-presenting system 1 according to the third embodiment is represented using the same reference numeral as that used in the first embodiment, and the descriptions and references to the figures of the element may be omitted. An element corresponding to that of the first embodiment is represented by adding the character "b" at the end of a reference numeral, and the description thereof may be omitted.

The inventors consider that a circumstance as described below may arise if either of the first and the second presenting method is employed in response to a certain input character string.

For example, when an input character string includes a name of a celebrity, a method for presenting a function based on a semantic category of a registered character string as the first presenting method may provide the same result regardless of the name of a celebrity included in the input character string. However, when an input character string includes a name of a celebrity, a function that a user prefers may differ depending on the name. For example, if a celebrity publishes a web blog, a user may desire to view the web blog. If a celebrity is a singer, a user may desire to listen to music performed by the celebrity Depending on the celebrity, a user may desire to view an image of a celebrity In view of this circumstance, it may be preferred to employ the second presenting method. However, to acquire a result of presenting a function that a user prefers in the second presenting method, it is required to refer to dictionary file 131a in which a sufficient result of statistics with regard to a situation of use by users is reflected. If there is insufficient statistical information, a preferable result of presentation may not be provided for a user. In addition, when an input character string includes a plurality of registered character strings, since a weight coefficient may vary depending on a combination of the registered character strings, it is not always possible to present a function preferable for a user. According to the circumstance described above, function-presenting system 1 according to the third embodiment alternatively employs either the first or the second presenting method described above.

Fig. 15 is a diagram showing dictionary file 131b. Server device 10 stores in storage unit 13 dictionary file 131b used as a voice-recognition dictionary.

As shown in Fig. 15, dictionary file 131b is a table of data items for associating information described in fields "registered character string," "first identifier," and "function information." In the field "registered character string," similar to dictionary file 131, a character string registered in dictionary file 131b is described. In the field "first identifier," the first identifier similar to that of dictionary file 131 is described. In the field "function information," information similar to that of dictionary file 131a is described.

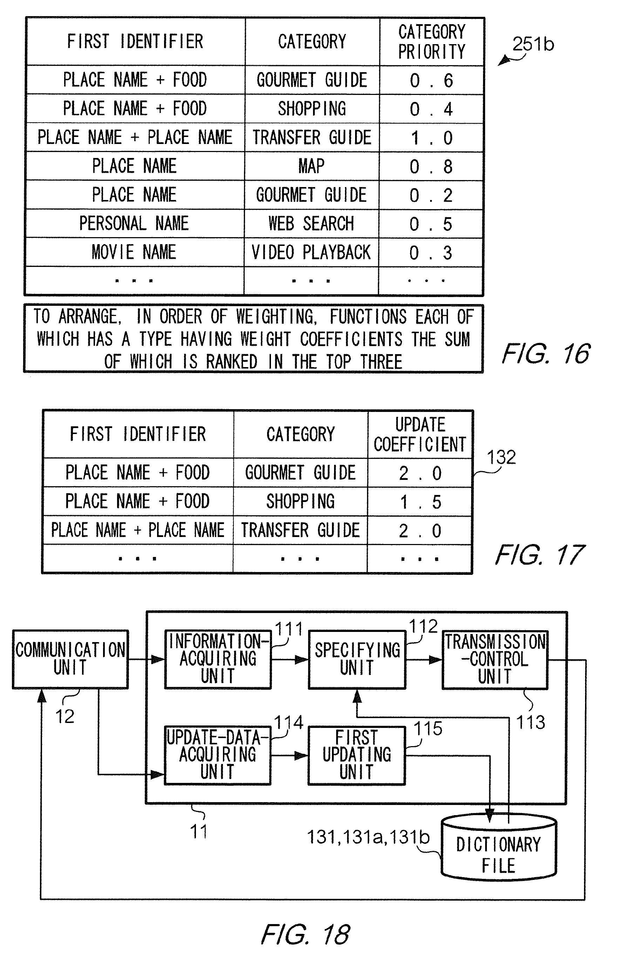

Function-selection file 251b shown in Fig. 16 describes the contents of both of the foregoing function-selection files 251 and 251a. Terminal device 20 stores function-selection files 251b in storage unit 25.

In function-presenting system 1 according to the third embodiment, a system for choosing between the first and the second presenting method includes a system as described below.

For example, when only a single registered character string corresponds to an input character string, specifying unit 112 specifies function information to employ the second presenting method. On the other hand, when there are two or more registered character strings, specifying unit 112 specifies the first identifier to employ the first presenting method. Server device 10 and terminal device 20 hereafter serve as those of either the first or the second embodiment described above based on the identifier specified by specifying unit 112. For example, when an input character string includes only either a registered character string "Shinagawa" or a registered character string "ramen," function-presenting system 1 employs the second presenting method. On the other hand, when an input character string includes two registered character strings "Shinagawa" and "ramen," function-presenting system 1 employs the first presenting method. Accordingly, it is possible to use the advantages of both of the first and the second presenting method.

When control unit 21 employs the second presenting method, control unit 21 may, with reference to weighting-update table 132 shown in Fig. 17, apply a weight coefficient to an update coefficient corresponding to a category (in this embodiment, by multiply) that is represented by the first identifier, and then may calculate the sum of weight coefficients. Weighting-update table 132 is, for example, controlled by server device 10 and is stored in storage unit 13. For example, for a function belonging to a category "gourmet guide" that is associated with the first identifier "place name + food," control unit 21 doubles weight coefficients by multiplying an update coefficient, and then calculates the sum of the weight coefficients. Accordingly, it is possible to reflect an application due to a semantic category used in the first presenting method in employing the second presenting method.

In another example, when only either the first identifier or the second identifier is described and associated with a registered character string corresponding to an input character string, specifying unit 112 employs from the first and second presenting system a presenting system that requires the described identifier. Accordingly, function-presenting system 1 can select an appropriate presenting method based on the presence of an identifier described in dictionary file 131b, and can present a more appropriate function.

In another example, when an input character string includes a registered character, in which statistics of a situation of use by a user are reflected in dictionary file 131b, function-presenting system 1 may employ the second presenting method; otherwise, function-presenting system 1 may employ the first presenting method. For example, server device 10 calculates a number of times an input character string includes a registered character string described in dictionary file 131b. If the number of times becomes greater than or equal to a threshold, function-presenting system 1 determines that there is a sufficient amount of statistics, and preferentially employs the second presenting method; otherwise, function-presenting system 1 employs the first presenting method.

Function-presenting system 1 may use a condition other than the condition described above for choosing between the first and the second presenting method. In addition, function-presenting system 1 according to the third embodiment also achieves an effect similar to that of each of the first and the second embodiment.

### <Fourth Embodiment>

The fourth embodiment of the present invention is described below.

Function-presenting system 1 according to the fourth embodiment includes a function for updating the dictionary file described in the first to third embodiments described above. An element in common with that of the first or the second embodiment of function-presenting system 1 according to the fourth embodiment is represented using the same reference numeral as that used in the first or the second embodiment, and the descriptions and references to the figures of the element may be omitted.

Fig. 18 is a block diagram showing a functional configuration of control unit 11 of server device 10.

As shown in Fig. 18, control unit 11 implements functions corresponding to information-acquiring unit 111, specifying unit 112, transmission-control unit 113, update-data-acquiring unit 114, and first updating unit 115 by executing a program. Information-acquiring unit 111, specifying unit 112, and transmission-control unit 113 serve in the same way as those of the first or the second embodiment described above. Update-data-acquiring unit 114 acquires update data for specifying a function that a user instructs to be implement after presenting unit 212 presents the plurality of functions. Upon being instructed to implement any of functions by an operation of UI unit 24, update-data-acquiring unit 114 acquires a notice of the instructed function as update data via communicating unit 12. A function that a user instructs to be implemented may be a function presented on a function-presenting screen, or may be a function not presented on a function-presenting screen.

First updating unit 115 updates dictionary file 131, 131 a based on the update data acquired by update-data-acquiring unit 114. First updating unit 115 updates dictionary file 131, 131 a such that a function specified by the update data acquired by update-data-acquiring unit 114 is likely to be presented by presenting unit 212.

An operation of function-presenting system 1 is described below. In the following description, an operation is described in a case of employing the first presenting method for presenting functions based on the first identifier, and in a case of employing the second presenting method for presenting functions based on function information as the second embodiment.

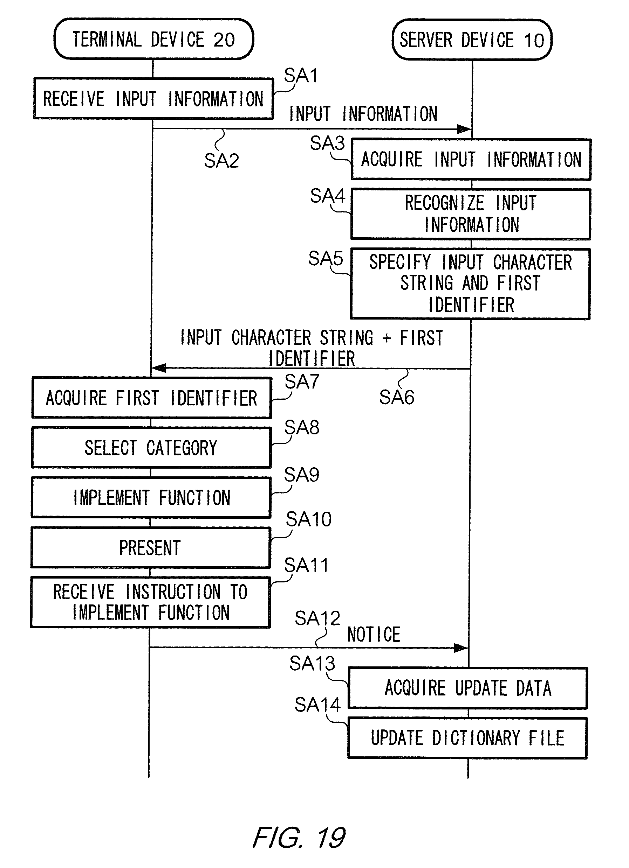

Fig. 19 is a sequence diagram showing an operation of function-presenting system 1 employing the first presenting method.

Process steps from step SA1 to step SA10 are the same as those of the foregoing first embodiment; and therefore, description thereof may be omitted herein.

After controlling UI unit 24 to display a function-presenting screen in the process of step SA10, control unit 21 of terminal device 20 receives an instruction input by a user to implement a function such as a designation of an icon image (step SA11). In this embodiment, it is assumed that in response to the result of presentation performed when registered character strings are "Shinagawa" and "ramen," a function implemented by executing a video player app is instructed. This "video player app" corresponds to a function not presented on a function-presenting screen.

Control unit 21 notifies server device 10 via wireless communication unit 23 of receiving the instruction to implement the function related to the video player app in response to the result of presentation performed when the registered character strings are "Shinagawa" and "ramen" (step SA12).

Upon receiving via communication unit 12 a notice of receiving the instruction to implement the function related to the video player app, control unit 11 of server device 10 acquires this notice as update data (step SA13). Control unit 11 subsequently updates dictionary file 131 based on the acquired update data (step SA14). An updating method of dictionary file 131 includes a method as described below.

For example, control unit 11 generates a single registered character string "Shinagawa ramen" by combining the registered character strings "Shinagawa" and "ramen," and newly describes the registered character string "Shinagawa ramen" in dictionary file 131. When an input character string includes the registered character string "Shinagawa ramen," control unit 11 determines the first identifier such that the function "video player app" is presented. In this case, the first identifier may be "movie name" associated in function-selection file 251 shown in Fig. 5 with a category "video playback" to which the video player app belongs.

As described above, control unit 11 generates a single registered character string by combining a plurality of registered character strings included in an input character string. Control unit 11 specifies a category to which a function implemented by terminal device 20 belongs based on update data acquired in the process of step SA13. Control unit 11 updates dictionary file 131 such that the first identifier associated with the specified category in function-selection file 251 is associated with the combined single registered character string.

In another example, control unit 11 may update dictionary file 131 such that the first identifiers associated with the registered character strings "Shinagawa" and "ramen" that are already registered, are rewritten. In this case, control unit 11 updates dictionary file 131 such that the first identifier "movie name" is added to both or either of the registered character strings "Shinagawa" and "ramen" in dictionary file 131.

As described above, control unit 11 specifies a category to which a function implemented by terminal device 20 belongs based on update data acquired in the process of step SA13. Control unit 11 updates dictionary file 131 such that a registered character string is associated with the first identifier that is associated with the specified category in function-selection file 251.

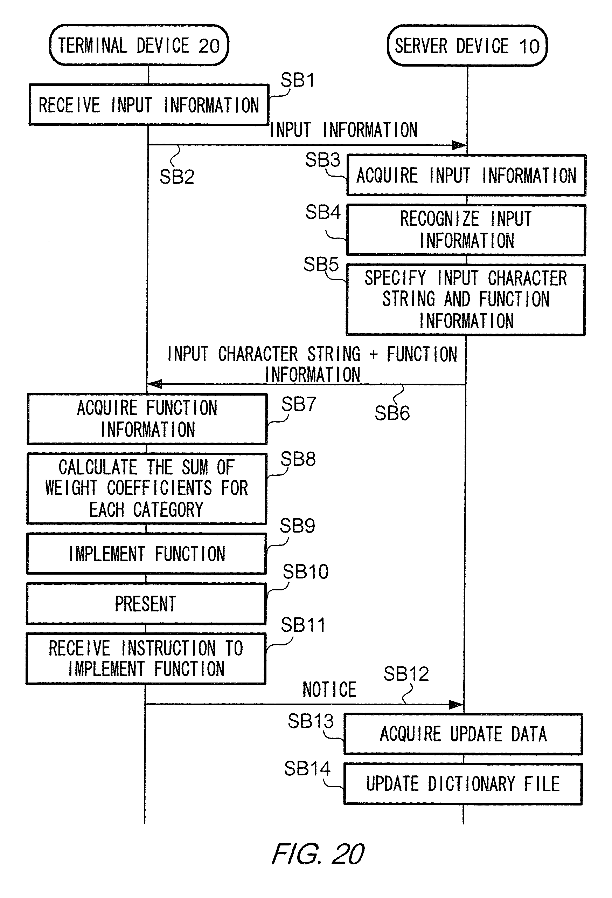

Fig. 20 is a sequence diagram showing an operation of function-presenting system 1 employing the second presenting method.

Process steps from step SB 1 to step SB 10 are the same as those of the foregoing second embodiment; and therefore, description thereof may be omitted herein. After controlling UI unit 24 to display a function-presenting screen in the process of step SB 10, control unit 21 of terminal device 20 receives an instruction input by a user to implement a function such as a designation of an icon image (step SB 11). In this embodiment, it is assumed that in response to the result of presentation performed when registered character strings are "Shinagawa" and "ramen," a function implemented by executing a video player app is instructed. Control unit 21 notifies server device 10 via wireless communication unit 23 of receiving the instruction to implement the function related to the video player app in response to the result of presentation performed when registered character strings are "Shinagawa" and "ramen" (step SB 12).

Upon receiving via communication unit 12 the notice of receiving the instruction to implement the function, control unit 11 of server device 10 acquires this notice as update data (step SB 13). Control unit 21 of terminal device 20 subsequently updates dictionary file 131 a based on the acquired update data (step SB14). A method of updating dictionary file 131a includes a method as described below.

For example, control unit 11 describes in dictionary file 131 a the registered character strings "Shinagawa" and "ramen" as a single registered character string "Shinagawa ramen." When an input character string includes this registered character string "Shinagawa ramen," control unit 11 sets function information such that the function "video player app" is likely to be presented in a function-selection service. For example, control unit 11 may set a weight coefficient of a category "video playback" to "1.0," or may set a weight coefficient of the function "video player app" to "1.0."

As described above, control unit 11 generates a single registered character string by combining a plurality of registered character strings included in an input character string. Control unit 11 also updates dictionary file 131 a such that the single first identifier is associated with a type of a function implemented by terminal device 20 (it does not matter whether the function per se or a category to which the function belongs is used) based on the update data acquired in the process of step SB 13.

In another example, control unit 11 may update dictionary file 131a such that function information associated with the registered character strings "Shinagawa" and "ramen" that are already registered, is rewritten. In this case, control unit 11 updates dictionary file 131 a such that the second identifier "movie name" and a weight coefficient are associated with both of the registered character strings "Shinagawa" and "ramen." In this embodiment, control unit 11 may generate a new weight coefficient by adding a predetermined value, for example, by adding value "0.1" to each of weight coefficients of the second identifiers "video playback" of the registered character strings "Shinagawa" and "ramen." In another example, control unit 11 may vary a weight coefficient by using an index, such as the foregoing rarity or the tf-idf, such that a weight coefficient of a registered character string having the higher rarity or the higher tf-idf increases by the greater amount. In another example, control unit 11 may add the function "video player app" as the second identifier of each of the registered character strings "Shinagawa" and "ramen."

As described above, control unit 11 updates, based on update data acquired in the process of step SB 13, dictionary file 131a by newly associating a type of a function implemented by terminal device 20 with a single registered character string included in an input character string, or by increasing a weight coefficient of the type of the function if the registered character string is already registered.

It is to be noted that in function-presenting system 1 a dictionary file may be updated every time a user uses the function-presenting service, or may be updated when the identical function is used a number of times greater than or equal to a threshold or at a frequency greater than or equal to a threshold by controlling a history of use of the function-presenting service in server device 10. In another example, in function-presenting system 1, the dictionary file may be updated when a number or a percentage of terminal devices 20 that has used the identical function becomes greater than or equal to a threshold based on a history of use of the function-presenting service. To control the history of use of the function-presenting service, for example, update-data-acquiring unit 114 stores (accumulates) in storage unit 13 a history of implementing a function (for example, including a type of the function, a time and date at which the function is implemented, information for identifying a terminal device that implements the function) specified by the acquired update data. First updating unit 115 updates the dictionary file based on the history of implementing a function accumulated in storage unit 13.

According to function-presenting system 1 described above, it is possible to update a dictionary file in response to learning an actual situation of use of a function by a user. In addition, according to function-presenting system 1, it is possible to provide an improved function-presenting service as a number of times the function-presenting service is used increases, and also to achieve an effect that a registered character string is automatically accumulated in the dictionary file. According to function-presenting system 1 of the fourth embodiment, it is possible to provide a service reflecting a situation such as a trend or fashion based on usage by many users.

It is to be noted that a configuration regarding an update of a dictionary file according to the fourth embodiment may be applied to the update of dictionary file 131b in the function-presenting system 1 according to the foregoing third embodiment.

### <Fifth Embodiment>

The fifth embodiment of the present invention is described below.

Function-presenting system 1 according to the fifth embodiment includes a function for updating function-selection file 251, 251a. An element in common with that of the first or the second embodiment of function-presenting system 1 according to the fifth embodiment is represented by using the same reference numeral as that used in the first or the second embodiment, and the descriptions and references to the figures of the element may be omitted.

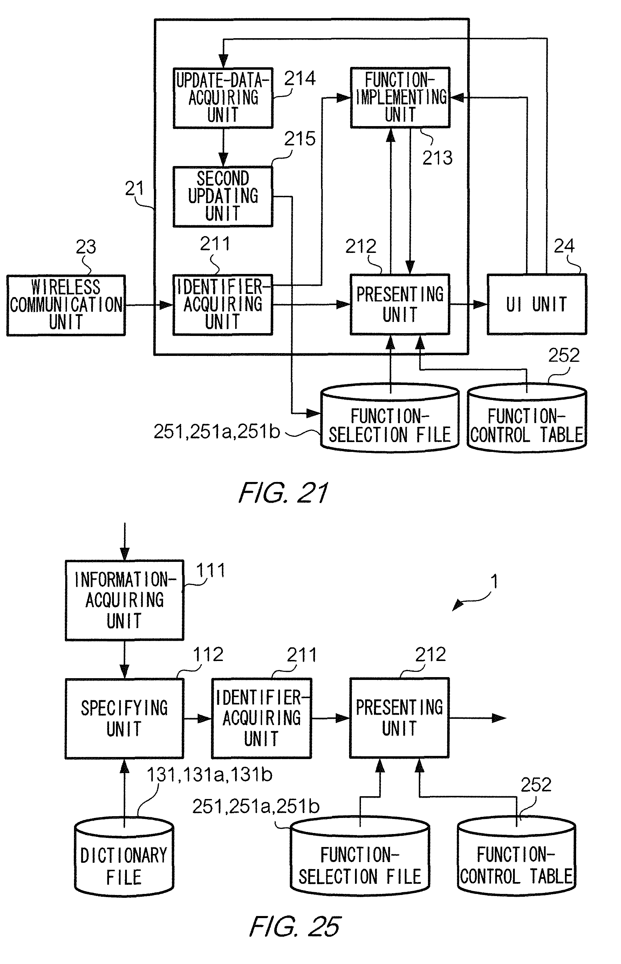

Fig. 21 is a block diagram showing a functional configuration of control unit 21 of terminal device 20.

As shown in Fig. 21, control unit 21 implements functions corresponding to identifier-acquiring unit 211, presenting unit 212, function-implementing unit 213, update-data-acquiring unit 214, and second updating unit 215 by executing a program. Identifier-acquiring unit 211, presenting unit 212, and function-implementing unit 213 serve in the same way as those of the first or the second embodiment described above. Update-data-acquiring unit 214 acquires update data for specifying a function that a user instructs to be implemented after presenting unit 212 presents the plurality of functions. Upon being instructed to implement any of functions by an operation of UI unit 24, update-data-acquiring unit 214 acquires update data of the instructed function.

Second updating unit 215 updates function-selection file 251, 251a based on a function specified by the update data acquired by update-data-acquiring unit 214. Second updating unit 215 updates function-selection file 251, 251a such that a function specified by the update data acquired by update-data-acquiring unit 114 is likely to be presented by presenting-unit 112.

An operation of function-presenting system 1 is described below. In the following description, an operation is described in a case of employing the presenting method of the first embodiment, and in a case of employing the presenting method of the second embodiment.

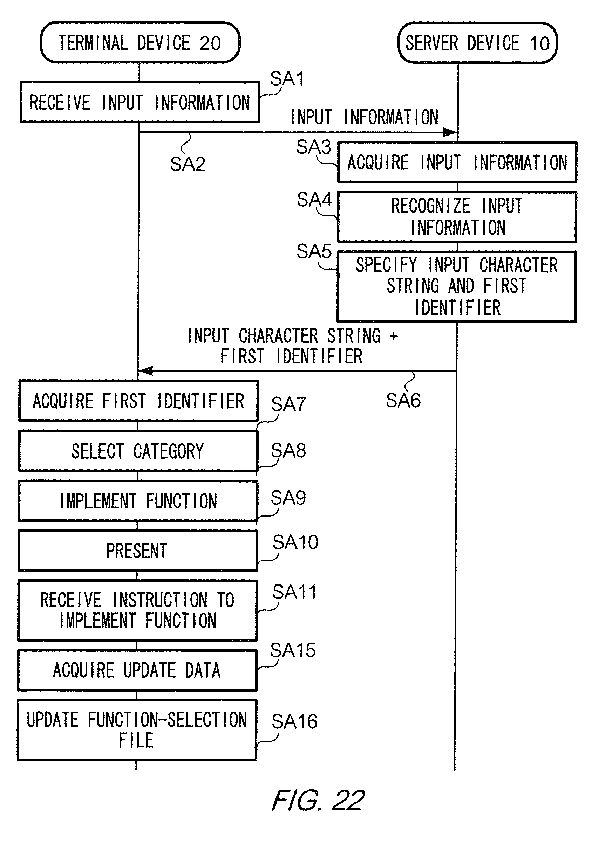

Fig. 22 is a sequence diagram showing an operation of function-presenting system 1 employing the first presenting method.

Process steps from step SA1 to step SA10 are the same as those of the foregoing first embodiment; and therefore, description thereof may be omitted herein.

After controlling UI unit 24 to display the function-presenting screen in the process of step SA10, control unit 21 of terminal device 20 receives an instruction input by a user to implement a function such as a designation of an icon image (step SA11). In this embodiment, it is assumed that in response to the result of presentation performed when registered character strings are "Shinagawa" and "ramen," a function implemented by executing a video player app is instructed.

Control unit 21 acquires an update data for specifying a function implemented by the video player app in response to the result of presentation performed when registered character string are "Shinagawa" and "ramen" (step SA 15). Control unit 21 subsequently updates function-selection file 251 based on the acquired update data (step SA16). An updating method of function-selection file 251 includes a method as described below.

For example, control unit 21 updates function-selection file 251 such that categories associated with first identifier "place name + food" are rewritten in response to the registered character strings "Shinagawa" + "ramen." In this case, control unit 21 updates function-selection file 251 such that a category "video playback" is associated with the first identifier "place name + food" or "personal name + food."

Accordingly, when an input character string includes the characters "Shinagawa" and "ramen," a function belonging to the category "video playback" is presented. In this case, since if registered character strings are "Oosaka" and "hamburg," the first identifier also becomes "place name + food" or "personal name + food," the function belonging to the category "video playback" is likely to be presented.

As described, control unit 21 specifies a category to which a function implemented by terminal device 20 belongs based on update data acquired in the process of step SA15. Control unit 21 updates function-selection file 251 by newly associating the first identifier acquired in the process of step SA7 with the specified category, or by increasing a category priority associating with the first identifier.

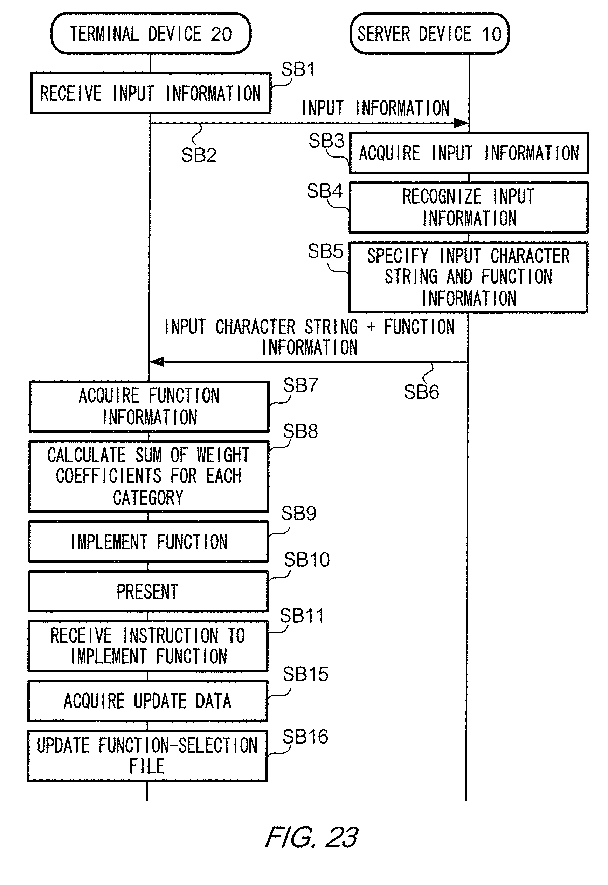

Fig. 23 is a sequence diagram showing an operation of function-presenting system 1 employing the second presenting method.

Process steps from steps SB 1 to SB 10 are the same as that of the foregoing second embodiment; and therefore, the description of which may be omitted herein. After controlling UI unit 24 to display the function-presenting screen in the process of step SB 10, control unit 21 of terminal device 20 receives an instruction input by a user to implement a function such as a designation of an icon image (step SB11). In this embodiment, it is assumed that an execution of a video player app is instructed in response to the result of presentation performed when registered character strings are "Shinagawa" and "ramen." Control unit 21 acquires update data for specifying a function implemented by the video player app in response to the result of presentation performed when registered character strings are "Shinagawa" and "ramen" (step SB15). Control unit 21 subsequently updates function-selection file 251 a based on the acquired update data (step SB 16). A method of function-selection file 251a includes a method as described below.

For example, control unit 21 updates function-selection file 25 1 a such as to forcibly include a category "video playback" in categories "gourmet guide," "map," and "recipe" that are selected in response to the registered character strings "Shinagawa" and "ramen." Accordingly, function-presenting system 1 hereafter presents the function "video player app" belonging to the category "video playback" when an input character string includes the characters "Shinagawa" and "ramen." In another example, in function-presenting system 1, function-selection file 251 a may describe such a content that the category "video playback" or the function "video player app" is treated as having the highest priority regardless of a weight coefficient.

As described above, control unit 11 specifies a type of a function implemented by terminal device 20 based on update data acquired in the process of step SB 13. Control unit 11 updates function-selection file 251a such that when function information corresponding to the same type as the specified type is acquired in the process of step SB7, the type is likely to be presented.

It is to be noted that in function-presenting system 1 a function-selection file may be updated every time a user uses the function-presenting service, or may be updated when an identical function is used a number of times greater than or equal to a threshold or at a frequency greater than or equal to a threshold by controlling a history of use of the function-presenting service in server device 10. In another example, in function-presenting system 1, the function-selection file may be updated when a number or a percentage of terminal devices 20 that has used the identical function becomes greater than or equal to a threshold based on a history of use of the function-presenting service. To control the history of use of the function-presenting service, for example, update-data-acquiring unit 214 accumulates in storage unit 25 a history of implementing a function (it may be the same data as that of the foregoing fourth embodiment) specified by the acquired update data. Second updating unit 215 updates the function-selection file based on the history of implementing a function accumulated in storage unit 25.

According to function-presenting system 1 according to the fifth embodiment, it is possible to update a function-selection file in response to learning an actual situation of use of a function by a user. In addition, according to this function-presenting system 1, it is possible to provide an improved function-presenting service as a number of times the function-presenting service is used increases. According to function-presenting system 1 of the fifth embodiment, it is possible to provide a service reflecting a situation such as a trend or fashion based on usage by many users.

It is to be noted that a configuration regarding an update of a function-selection file according to the fifth embodiment may be applied to the update of function-selection file 251b of the function-presenting system 1 according to the foregoing third embodiment. The function-presenting system 1 may include functions for update according to both the fourth and the fifth embodiments.

### <Modifications>

The present invention may be implemented in an embodiment different from the foregoing embodiments. For example, the present invention may be implemented in embodiments as described below. The following modifications may be combined with each other.

### <Modification 1>

In each embodiment described above, terminal device 20 specifies a function to be presented based on a dictionary file and function-selection table; however, terminal device 20 may operate as described below. It is to be noted that in the present modification, terminal device 20 acquires an input character string before server device 10 specifies an identifier. Terminal device 20 acquires an input character, for example, by a voice recognition function of the terminal device 20.

It is to be noted that in the following description, a description of a control performed by control unit 11 through the use of an input character string acquired from server device 10, is omitted.

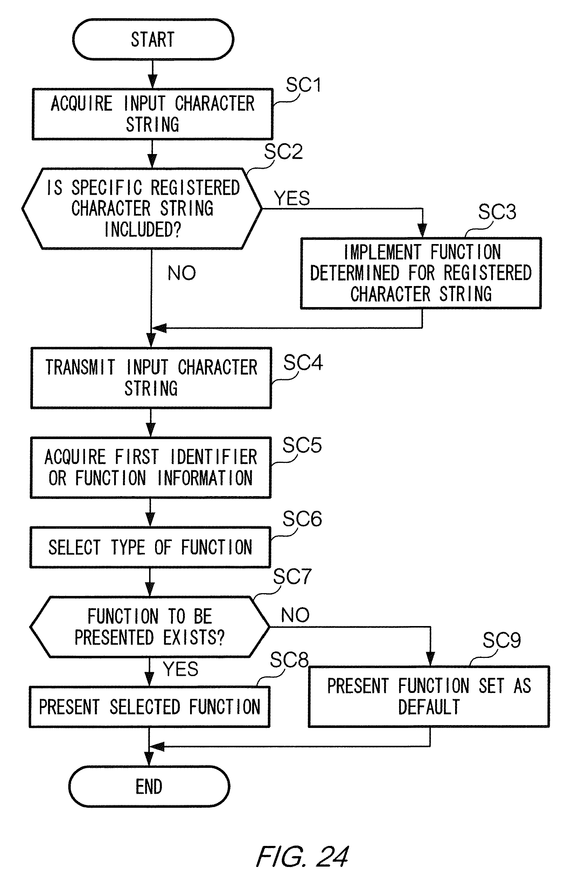

Fig. 24 is a flow chart showing an operation of terminal device 20.

Control unit 21 acquires an input character string (step SC1). Control unit 21 subsequently determines whether the input character string includes a specific registered character string (step SC2). In this embodiment, the specific registered character string is a predetermined character string that enables specifying a function that a user desires to use such as character strings "(a name of search site A) OO" and "map XX." When an input character string includes such a character string, it is possible to say that a user substantially designates a function that the user desires to use.

If control unit 21 determines that the input character includes the specific registered character string (step SC2; YES), control unit 21 implements a function determined for the specific registered character string. For example, when an input character string is "(a name of search site A) OO," control unit 21 searches information in search site A using a search term "OO." When an input character string is "map, Shinagawa," control unit 21 displays a map around Shinagawa Ward by executing a map app.

Such a correspondence between a specific registered character string and a function to be implemented may be stored in storage such as storage unit 25. In this case, control unit 21 may refer to this correspondence.

After control unit 21 executes the process of step SC3, or if control unit 21 determines that the input character string includes no specific registered character string in the process of step SC2 (step SC2; NO), control unit 21 transmits the input character string to server device 10 via wireless communication unit 23 (step SC4). When server device 10 specifies the first identifier or function information by using the input character string as input information in a sequence of each embodiment described above, control unit 21 receives the first identifier or function information via wireless communication unit 23 (step SC5). Control unit 21 specifies a type of a function based on the received first identifier or function information, a function-selection file and function-control table 252 (step SC6), and determines whether a function to be presented exists (step SC7).

If a function to be presented exists (step SC7; YES), control unit 21 presents the function according to function-control table 252, in a similar manner to that of each embodiment described above (step SC8). Meanwhile, if no function to be presented exists (step SC7; NO), control unit 21 presents a function set as a default (step SC9). In this embodiment, control unit 21 presents a predetermined function, the predetermined function being estimated to be such that a user is likely to desire when an appropriate function cannot be presented, such as a predetermined information-search site or notepad. This function may be determined by a user setting or may be determined at a stage such as a design stage. Alternatively, control unit 21 may present a function that is determined based on a history of use by a user that a number of times or frequency the function is used, is greater than or equal to a threshold.

According to the present modification, terminal device 20 can estimate and present, from a character string per se included in an input character string, a function that a user desires. In addition, even if no function to be presented exists, for a situation that a user is inconvenienced by no function being presented is avoided.

### <Modification 2>

Since in each embodiment described above, a function is presented by referring to a dictionary file and function-selection file in response to an input character string, an identical result of presentation may be provided when an input character string includes an identical registered character string regardless of a notation of the registered character string. For example, when an input character string includes a single registered character string "ramen," an identical result of presentation may be provided even if the input character string is "I want to eat ramen" or "how to cook ramen." However, in a case of the former input character string, it is possible to say that a function of a category "gourmet guide" is preferable for a user. On the other hand, in a case of the latter input character string, it is possible to say that a function of a category "recipe" is preferable for a user. In this manner, a notation of a registered character string included in an input character string may vary depending on a character string (or character) other than a registered character string included in an input character string.

Accordingly, in the present modification, presenting unit 212 acquires an input character string together with an identifier from identifier-acquiring unit 211, and varies a manner of presenting a function (a displayed content (a character string or an image (icon) that represents each function), display position (order) or size, etc.) according to a notation of a registered character string included in an input character string. For example, storage unit 25 stores information representing a category or function corresponding to a character string such as "I want to eat" or "how to cook." Presenting unit 212 specifies a function to be presented prior to another functions according to this information. Presenting unit 212 may vary a manner of presenting a function by varying an order in which icon images are arranged, or may present only a function to be presented preferentially.

In another example, presenting unit 212 may present a function without referring to a function-selection file when a number of characters, a number of registered character strings, or a number of morphemes in an input character string is greater than or equal to a threshold by analyzing the input character string. For example, when an input character string is "who is the inventor of ramen," presenting unit 212 selects a function belonging to a category "web search" or "notepad" as a predetermined function.

### <Modification 3>

In each embodiment described above, server device 10 implements functions corresponding to information-acquiring unit 111, specifying unit 112, and transmission-control unit 113; terminal device 20 implements functions corresponding to identifier-acquiring unit 211, presenting unit 212, and function-implementing unit 213. However, which device implements each function described above is not limited to this aspect. In summary, function-presenting system 1 implements the functional configuration, for example, shown in Fig. 25.

For example, server device 10 may implement functions corresponding to information-acquiring unit 111, specifying unit 112, and identifier-acquiring unit 211. In this case, server device 10 stores both a dictionary file and a function-selection file. Upon selecting a type of a function to be presented with reference to the function-selection file, server device 10 notifies terminal device 20 of details of the selection. In terminal device 20, presenting unit 212 presents a function of the notified type with reference to a function-control table.

In another example, terminal device 20 may implement all of the functions described above. In this case, upon acquiring input information, terminal device 20 specifies an input character string represented by the input information and an identifier (namely, the first or the second identifier) with reference to a dictionary file. Terminal device 20 presents a function based on the specified identifier, a function-selection file, and function-control table. In this case, terminal device 20 stores both the dictionary file and function-selection file. Even by this configuration, terminal device 20 can update the dictionary file and function-selection file in a similar manner to that of the fourth or the fifth embodiment described above, by transmitting update data from server device 10 to terminal device 20 or the like. In this case, server device 10 may store the dictionary file and function-selection file. Terminal device 20 may query server device 10 to perform a process referring to the function-selection file.

In summary, a system of the present invention may include an information acquiring unit that acquires input information; a first memory that stores a plurality of identifiers, each representing a category of a registered character string; a specifying unit that, with reference to the first memory, specifies, based on the input information acquired by the information acquiring unit, a single identifier or a plurality of identifiers of a single registered character string or a plurality of registered character strings corresponding to an input character string represented by the input information; a second memory that stores a correspondence between each of the plurality of identifiers and a single function or a plurality of functions; and a presenting unit that, with reference to the second memory, determines a plurality of functions based on the single identifier or the plurality of identifiers specified by the specifying unit, and presents the determined plurality of functions in a predetermined manner.

### <Modification 4>

In function-presenting system 1 according to each embodiment described above, a dictionary file or function-selection file to be referred to may vary depending on a situation.

For example, in function-presenting system 1, a dictionary file or function-selection file to be referred to may vary depending on a user attribute of a user of terminal device 20. In this case, terminal device 20 transmits to server device 10 attribute information representing the user attribute, such as gender, age, a birthplace, and a hobby of a user, at a timing when input information is transmitted and so on. Control unit 11 of server device 10 (information-acquiring unit 111) acquires the attribute information representing the user attribute. Control unit 11 (specifying unit 112) specifies an identifier with reference to a dictionary file corresponding to the user attribute represented by the acquired attribute information. On the other hand, control unit 11 (presenting unit 212) of terminal device 20 presents functions with reference to a function-selection file corresponding to the user attribute. Accordingly, even if a trend in using a function varies depending on a user attribute, it is possible to reflect this trend in a function-presenting service.

In another example, in function-presenting system 1, a dictionary file or function-selection file to be referred to may be different for each user.

In another example, a dictionary file or function-selection file to be referred to in function-presenting system 1 may vary depending on a position of terminal device 20. For example, when a user of terminal device 20 is located in Tokyo and searches information on Oosaka, it is estimated that the user is likely to desire to search a standard sightseeing destination. On the other hand, when a user of terminal device 20 is located in Oosaka and searches information on Oosaka, it is estimated that the user is likely to desire to search a rail transfer guide. In this manner, it is considered that a trend in using a function in response to a certain input character string varies depending on where a user is located. Accordingly, terminal device 20 specifies a position of this terminal device 20 by using a Global Positioning System (GPS) or base station, and notifies server device 10 of the position. Server device 10 and terminal device 20 may present functions by selecting a dictionary file or function-selection file corresponding to the position.

In another example, a dictionary file or function-selection file to be referred to in function-presenting system 1 may vary depending on a time. For example, when an input character string including a registered character string "hamburger" is used during a daytime or nighttime, since it is estimated that a user desires to eat a hamburger, it is estimated that a function of a category "gourmet guide" is appropriate for the user. On the other hand, when an input character string including a registered character string "hamburger" is used in the evening, since it is estimated that a user desires to search a recipe for making a hamburger, it is estimated that a function of a category "recipe" is appropriate for the user. Accordingly, server device 10 specifies a present time based on a time measured by a timer, and selects and refers to a dictionary file corresponding to the specified present time. Terminal device 20 may also specify a present time based on a time measured by a timer, and select a function-selection file corresponding to the specified present time to present functions.

A configuration for varying a dictionary file or function-selection file to be referred to depending on a position of terminal device 20 or a time can be implemented by varying a category priority or weight coefficient depending on a position of terminal device 20 or a time.

### <Modification 5>

In function-presenting system 1 according to each embodiment described above, information "category priority" or "function priority" exists; however the present invention does not have to use this information. Even in such a case, terminal device 20 can present functions. If no "function priority" exists, terminal device 20 treats a plurality of categories specified based on the first identifier as equal. Alternatively, for example, terminal device 20 may treat a category listed earlier in function-selection file 251 as a category having a high category priority. If no "function priority" exists, terminal device 20 treats a plurality of functions belonging to each category as equal. Alternatively, for example, terminal device 20 may treat the functions such that a function listed earlier in function-control table 252 has a higher function priority.

### <Modification 6>

In the process of step SA9 or step SB9, terminal device 20 implements a function without an instruction input by a user; however, terminal device 20 may not implement this function. In this case, control unit 21 does not have to implement a function corresponding to function-implementing unit 213. In this case, server device 10 provides terminal device 20 with an identifier specified in response to an input character string, but may not provide the input character string. Of course, if function-implementing unit 213 does not use an input character string to implement a function without an instruction input by a user, server device 10 may not provide terminal device 20 with an input character string.

If terminal device 20 is able to arrange and present results of implementing a plurality of functions on a function-presenting screen, terminal device 20 may implement, without receiving an instruction input by a user, a plurality of functions that satisfies a determine condition in order to present the result. In this case, for example, terminal device 20 implements all of functions belonging to categories each of which has a category priority greater than or equal to a threshold.

### <Modification 7>

In each embodiment described above, server device 10 specifies an identifier when a registered character string included in an input character string matches a registered character string described in a dictionary file. However, in view of orthographical variants, for example, in response to a character string "Chinese noodles" included in an input character string, server device 10 may specify an identifier of the registered character string "ramen" registered in a dictionary file. In another example, in view of an abbreviation, in response to a character string "PC" included in an input character string, server device 10 may specify an identifier of a registered character string "personal computer" registered in a dictionary file. In this manner, server device 10 specifies an identifier of a registered character string corresponding to an acquired input character string with reference to a dictionary file.

### <Modification 8>

In each embodiment described above, input information input into terminal device 20 is not limited to sound information. Input information may be image information representing a content photographed by a photographing device of terminal device 20. In this case, for example, the photographing device photographs a document including a character string (for example, handwritten character). Control unit 11 of server device 10 recognizes input information that is image information with reference to a dictionary file. The dictionary file is used as a character-recognition dictionary. In the dictionary file, an identifier is assigned to a registered character string. Control unit 11 specifies a recognized input character string and an identifier of a registered character string corresponding to the input character string.

In this manner, if input information enables recognition of an input character string by referring to a dictionary file, and an identifier is assigned to a registered character string in the dictionary file, server device 10 does not require a process for referring to a database to specify an identifier after acquiring an input character string. Accordingly, in a similar manner to that of each embodiment described above, an increased time period from when input information is input in terminal device 20 to when functions are presented is avoided.

In another example, character information may be input as input information in terminal device 20 by an operation of UI unit 24 performed by a user. In this case, terminal device 20 receives an input character string as input information, and provides server device 10 with the input character string. In this case, a dictionary file used for specifying an identifier does not have to be a dictionary used for recognizing input information. In this manner, server device 10 does not have to include a function for specifying a character string by recognizing input information.

If input information is sound information, terminal device 20 may specify an input character string by voice recognition through the use of a voice-recognition function implemented in terminal device 20, and may provide server device 10 with the input character string. The voice recognition may be performed by a device other than terminal device 20 and server device 10 (for example, generic voice-recognition server).

### <Modification 9>

The first identifier and the second identifier may be represented by a serial number or a meaningless character if they identify a category of a registered character string.

In function-presenting system 1 according to each embodiment described above, a plurality of functions belongs to a single category; however, a single function may belong to a single category. In this case, a type of a function of the present invention inevitably corresponds to a function per se.

A manner of presenting a function in terminal device 20 is not limited to a display of an icon image, but also to, for example, a manner for displaying a character string "search site A." Terminal device 20 may perform a presentation for only a purpose of notifying a function, instead of providing a display that allows a user to instruct implementation of a function from a result of presentation.

Each function implemented by control unit 11 of server device 10 or control unit 21 of terminal device 20 may be implemented by a combination of a plurality of programs, or may be implemented by a co-operation of a plurality of hardware resources. In the present invention, any method is applied for implementing each function described above in a hardware resource.

## Claims

1. A function-presenting system comprising:
an information-acquiring unit that acquires input information;
a first memory that stores a plurality of identifiers, each identifier representing a category of a registered character string;
a specifying unit that, with reference to the first memory, specifies, based on the input information acquired by the information-acquiring unit, an identifier of a registered character string corresponding to an input character string represented by the input information;
a second memory that stores a correspondence between each of the plurality of identifiers and a plurality of functions; and
a presenting unit that determines a plurality of functions based on the identifier specified by the specifying unit with reference to the second memory, and presents the determined plurality of functions in a predetermined presenting manner.

2. The function-presenting system according to Claim 1, wherein:
the first memory stores a dictionary file in which a single identifier is assigned to a registered character string, the dictionary being used for recognizing the input information; and
the specifying unit recognizes the acquired input information with reference to the dictionary file, and specifies a recognized input character string and an identifier of a registered character string corresponding to the recognized input character string.

3. The function-presenting system according to Claim 1 or 2, wherein the specifying unit specifies two or more identifiers for a single registered character string included in the input character string.

4. The function-presenting system according to any one of Claims 1 to 3, wherein:
each of the plurality of identifiers represents a category corresponding to a meaning of a single registered character string;
the second memory stores a single identifier and a plurality of types of functions in association with each other; and
the plurality of functions presented by the presenting unit includes a function belonging to a type stored in the second memory in association with the identifier specified by the specifying unit.

5. The function-presenting system according to any one of Claims 1 to 3, wherein:
each of the plurality of identifiers represents a plurality of types of functions determined for the registered character string;
the first memory stores a plurality of weighting values assigned to respective pluralities of types of functions;
the specifying unit specifies the identifier and a plurality of weighting values assigned to respective pluralities of types of functions represented by the specified identifier with reference to the first memory; and
the presenting unit determines the plurality of functions to be presented based on the identifier and the plurality of weighting values specified by the specifying unit.

6. The function-presenting system according to any one of Claims 1 to 3, wherein:
each of the plurality of identifiers includes at least one first identifier representing a category corresponding to a meaning of the registered character string, and a plurality of second identifiers representing respective pluralities of types of functions determined for the registered character string;
the first memory stores the at least one first identifier, the plurality of second identifiers, and a plurality of weighting values assigned to the respective pluralities of types of functions for each registered character string; and
the presenting unit determines the plurality of functions to be presented based on the at least one first identifier specified by the specifying unit or the plurality of weighting values corresponding to the plurality of second identifiers specified by the specifying unit with reference to the second memory.

7. The function-presenting system according to any one of Claims 1 to 6, wherein the presenting unit varies the presenting manner based on a notation of a registered character string corresponding to the input character string.

8. The function-presenting system according to any one of Claims 1 to 7, further comprising a first updating unit that updates a content stored in the first memory based on a single function that a user instructs to be implemented after the plurality of functions are presented by the presenting unit.

9. The function-presenting system according to any one of Claims 1 to 8, further comprising a second updating unit that updates a content stored in the second memory based on a single function that a user instructs to be implemented after the plurality of functions are presented by the presenting unit.

10. The function-presenting system according to any one of Claims 1 to 9, further comprising a function-implementing unit that implements a single function satisfying a determined condition of the plurality of functions presented by the presenting unit; and
wherein
the presenting unit presents a result of implementing a function by the function-implementing unit, together with a plurality of functions determined based on the identifier specified by the specifying unit.

11. A function-presenting system comprising:
a server device and a terminal device;
the server device including:
a first communication unit that communicates with the terminal device;
an information-acquiring unit that acquires input information input via the terminal device;
a first memory that stores a plurality of identifiers, each representing a category of a registered character string;
a specifying unit that, with reference to the first memory, specifies, based on the input information acquired by the information-acquiring unit, an identifier of a registered character string corresponding to an input character string, the input character string being represented by the input information; and
a transmission-control unit that controls the first communication unit to transmit to the terminal device the identifier specified by the specifying unit; and
the terminal device including:
a second communication unit that communicates with the server device;
a second memory that stores a correspondence between each of the plurality of identifiers, and a single function or a plurality of functions;
an identifier-acquiring unit that acquires the identifier received from the server device via the second communication unit; and
a presenting unit that determines a plurality of functions based on the identifier acquired by the identifier-acquiring unit with reference to the second memory, and presents the determined plurality of functions in a predetermined presenting manner.

12. A terminal device comprising:
a communication unit that communicates with a server device;
an identifier-acquiring unit that acquires an identifier via the communication unit when the server device specifies the identifier representing a category of a registered character string corresponding to an input character string, the input character string being represented by input information input into the terminal device;
a memory that stores a correspondence between each of a plurality of identifiers and a plurality of functions; and
a presenting unit that determines a plurality of functions based on the identifier acquired by the identifier-acquiring unit with reference to the memory, and presents the determined plurality of functions in a predetermined presenting manner.

13. A server device comprising:
a communication unit that communicates with a terminal device, the terminal device presenting a plurality of functions corresponding to an identifier received from the server device;
an information-acquiring unit that acquires input information input into the terminal device;
a memory that stores a plurality of identifiers, each representing a category of a registered character string;
a specifying unit that, with reference to the memory, specifies, based on the input information acquired by the information-acquiring unit, an identifier of a registered character string corresponding to an input character string represented by the input information; and
a transmission-control unit that controls the communication unit to transmit to the terminal device the identifier specified by the specifying unit.

14. A program for causing a computer of a terminal device including a communication unit to execute the steps of:
acquiring an identifier via the communication unit when a server device specifies the identifier representing a category of a registered character string for the registered character corresponding to an input character string, the input character string being represented by input information input into the terminal device;
determining a plurality of functions based on the acquired identifier with reference to the memory, the memory storing a correspondence between each of a plurality of identifiers and a plurality of functions; and
presenting the determined plurality of functions in a predetermined presenting manner.

15. A program for causing a computer of a server device including a communication unit to execute the steps of:
acquiring input information input via a terminal device, the terminal device presenting a plurality of functions corresponding to an identifier received from the server device;
specifying, based on the acquired input information and with reference to a memory, an identifier of a registered character string corresponding to an input character string represented by the input information, the memory storing a plurality of identifiers, each representing a category of a registered character string; and
controlling the communication unit to transmit the specified identifier to the terminal device.

16. A function-presenting method comprising the steps of:
acquiring input information;
specifying, based on the acquired input information and with reference to a first memory, an identifier representing a category of a registered character string corresponding to an input character string represented by the input information, the first memory storing a plurality of identifiers, each representing a category of a registered character string;
determining a plurality of functions based on the specified identifier with reference to a second memory, the second memory storing a correspondence between each of the plurality of identifiers and a plurality of functions; and
presenting the determined plurality of functions in a predetermined presenting manner.
